Europäisches Patentamt

European Patent Office

Office européen des brevets

(11) Publication number: **0 506 104 A2**

# EUROPEAN PATENT APPLICATION

(21) Application number: **92105338.5**

(22) Date of filing: **27.03.92**

(51) Int. Cl.5: **G06F 3/033**

(30) Priority: **29.03.91 JP 91645/91**

(43) Date of publication of application:
**30.09.92 Bulletin 92/40**

(84) Designated Contracting States:
**DE FR GB**

(71) Applicant: **Kabushiki Kaisha Toshiba**
**72, Horikawa-cho Saiwai-ku**
**Kawasaki-shi(JP)**
Applicant: **TOSHIBA COMPUTER**
**ENGINEERING CORPORATION**
**1381-1, Shinmachi**
**Oome-shi, Tokyo(JP)**

(72) Inventor: **Kamio, Shizuo, c/o Intellectual**
**Property Div.**
**Kabushiki Kaisha Toshiba, 1-1 Shibaura**
**1-chome**
**Minato-ku, Tokyo 105(JP)**
Inventor: **Miyagawa, Shigenori, c/o**
**Intellectual Property Div**
**Kabushiki Kaisha Toshiba, 1-1 Shibaura**
**1-chome**
**Minato-ku, Tokyo 105(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Correction/edit system.**

(57) An extraction region to be corrected/edited is set on a display device (3) on the basis of a display content displayed on the display device based on data input from, e.g., an external storage device, and a display content in the region is displayed in an enlarged scale on an integrated handwriting input/display device (1a, 1b). A correction/edit operation is performed on the integrated handwriting input/display device (1a, 1b) using a stylus pen (1k), and a content changed by the correction/edit operation is displayed on the display device (3) in real time.

FIG. 1A    FIG. 1B

FIG. 1C

The present invention relates to a correction/edit system for correcting/editing, e.g., a figure displayed on a display device.

An information processing apparatus such as a work station, a personal computer, or the like generally comprises a display and a keyboard. As a means for improving operability, a pointing device such as a mouse is also used.

An information processing apparatus using a pointing device is popularly used in a system such as a CAD (Computer Aided Design) system or a DTP (Desk Top Publishing) system that requires complicated edit works on a screen, since it can easily indicate an arbitrary point on a screen as compared to an information processing apparatus comprising only a keyboard.

Since such a system requires delicate position adjustments and fine input works on a screen, an arbitrary region on the screen can be displayed in an enlarged scale to facilitate fine works. However, when a fine work is performed, an operator can only see that region. Thus, when the operator wants to see the remaining region, he or she must interrupt the current work, and must switch the screen, resulting in poor work efficiency. Furthermore, when an enlarged screen is displayed, the entire screen is not displayed at all, or is displayed within a window in a reduced scale if it is displayed. Thus, an operator cannot judge the overall layout while correcting and editing a given region.

The present invention has been made in consideration of the above situation, and has as its object to provide a correction/edit system, which can realize efficient correction/edit works.

This object can be achieved by the following arrangement.

A correction/edit system having two display devices, comprises: overall image display means for displaying an overall image on a first display device on the basis of input data; region setting means for setting an extraction region to be corrected/edited from a display content displayed on the first display device by the overall image display means; enlargement display means for displaying a display content in the region set by the region setting means on a second display device in an enlarged scale according to the size of the region; correction/edit means for correcting/editing the display content displayed in the enlarged scale by the enlargement display means; and display rewrite means for rewriting the display content in the region extracted screen the first display device according to data changed by the correction/edit means.

According to this arrangement, an arbitrary region in a display screen displayed on one of the two display devices can be displayed in an enlarged scale on the other display device, and can be corrected/edited. An operator can immediately see the corrected/edited result on one display device.

Thus, a region to be corrected/edited can be displayed in an enlarged scale to facilitate fine works, and the overall screen can be seen without screen switching, thus allowing efficient correction/edit works.

This invention can be more fully understood from the following detailed description when taken in conjunction with the accompanying drawings, in which:

Figs. 1A, 1B, and 1C are perspective views showing a correction/edit system according to the present invention, and its use states;

Fig. 2 is a schematic block diagram of an integrated handwriting display/input device, and a processing control unit in the correction/edit system;

Fig. 3 is a perspective view showing a structure of a position input unit of the integrated handwriting display/input device;

Fig. 4 is a block diagram showing a functional arrangement of the integrated handwriting display/input device;

Fig. 5 is a block diagram showing an arrangement of a correction/edit system according to the present invention;

Fig. 6 is a schematic block diagram showing an arrangement of the processing control unit;

Fig. 7 is a schematic block diagram showing an arrangement of a region data buffer;

Fig. 8 is a schematic block diagram showing an arrangement of a ruled line data buffer;

Fig. 9 is a schematic block diagram showing an arrangement of an item data buffer;

Fig. 10 is a schematic block diagram showing an arrangement of a character input region data buffer;

Fig. 11 is a schematic block diagram showing a format of region data;

Fig. 12 is a schematic block diagram showing a format of frame coordinate data;

Figs. 13A and 13B illustrate a flow chart showing a processing sequence up to creation of ruled lines (figure input frame), a setting operation of processing attributes in each item (region), and a data input operation to the created input frame;

Fig. 14 shows an initial frame displayed on a display unit;

Fig. 15 is a flow chart showing a processing sequence of table creation processing;

Fig. 16 is a view showing a method of discriminating a vertical line and a horizontal line;

Fig. 17 shows a display frame on which an outer frame is being created;

Fig. 18 shows a display frame on which creation of the outer frame is completed;

Fig. 19 shows a display frame for displaying a table obtained by processing for creating ruled lines;

Fig. 20 is a flow chart showing a processing sequence of attribute setting processing;

Fig. 21 shows a display frame representing a state wherein attributes are set in designated regions in a table;

Fig. 22 is a flow chart showing a processing sequence of data input processing;

Fig. 23 is a flow chart showing a processing sequence executed when data are input to regions set with character input processing upon setting of items;

Fig. 24 shows a display frame for displaying a character input window;

Fig. 25 shows a display frame in a state wherein characters are input to some regions in a table;

Fig. 26 is a flow chart showing a processing sequence of handwritten character recognition processing;

Fig. 27 is a view showing direction values of writing strokes;

Fig. 28 is a view showing a result obtained when a numeral "3" is converted into direction values;

Fig. 29 is a view showing a schematic format of recognition dictionary data applied to the character recognition processing;

Fig. 30 is a flow chart showing a processing sequence of paper size processing;

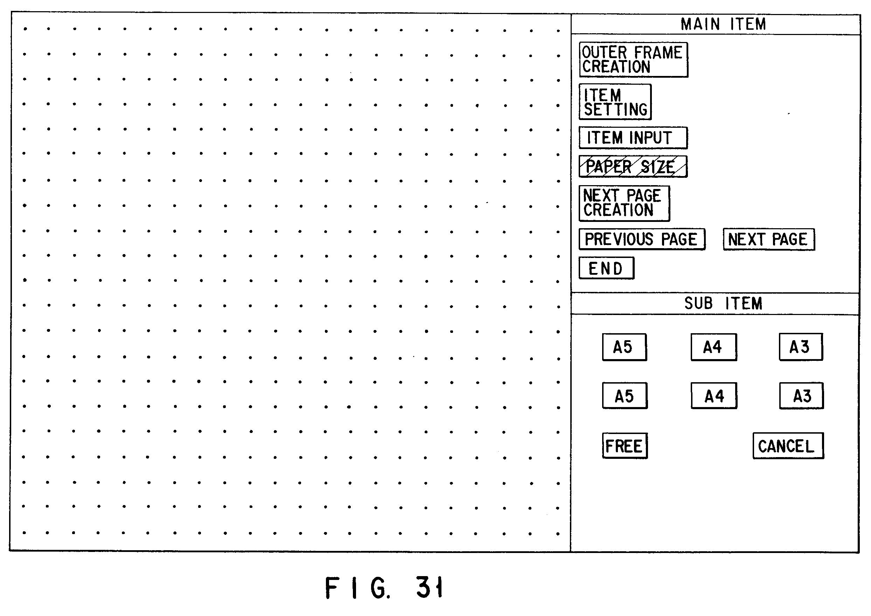

Fig. 31 shows a display frame in the paper size processing;

Fig. 32 is a block diagram showing selection items upon setting of grid intervals;

Fig. 33 is a flow chart showing a processing sequence of enlargement/reduction processing;

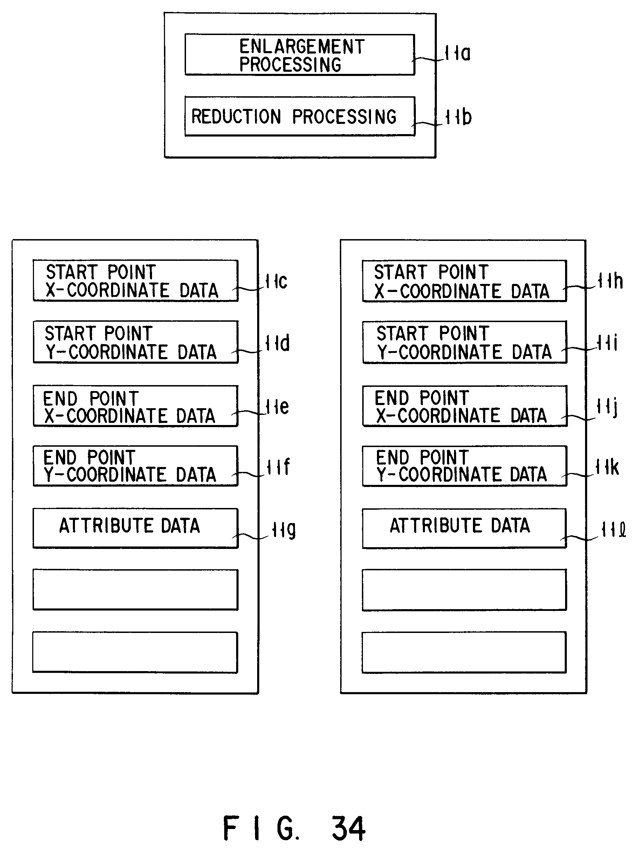

Fig. 34 is a schematic block diagram showing selection items of the enlargement/reduction processing and an arrangement of a data buffer;

Fig. 35 shows a memory map of the processing control unit;

Fig. 36 is a flow chart showing a correction/edit processing sequence;

Fig. 37 shows a display frame for displaying the overall frame;

Fig. 38 shows an enlarged display frame of a region designated on the overall frame shown in Fig. 37;

Fig. 39 shows a display frame for displaying the overall frame; and

Fig. 40 shows an enlarged display frame of a region designated on the overall frame shown in Fig. 39.

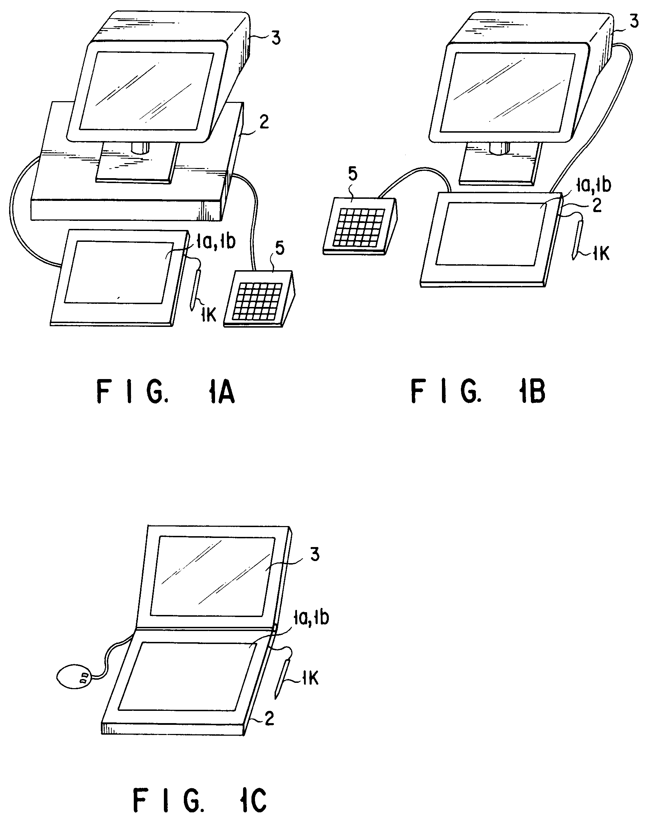

An embodiment of the present invention will be described hereinafter with reference to the accompanying drawings. Figs. 1A, 1B, and 1C are perspective views showing use states of a correction/edit system according to this embodiment. The correction/edit system of this embodiment comprises a display unit 3 and a display unit 1b as two display devices. The display unit 3 displays the overall or partial screen of a content to be corrected. On the display unit 1b, the screen to be corrected displayed on the display unit 3 is partially extracted, and characters or figures are corrected. Fig. 1A shows a correction/edit system constituted by a processing apparatus including a processing control unit 2 and the display unit 3, and an integrated handwriting display/input device 1. Fig. 1B shows a correction/edit system constituted by the processing apparatus including the integrated handwriting display/input device 1 and the processing control unit 2, and the display unit 3. Fig. 1C shows a compact and integrated correction/edit system as a combination of the display unit 3, the integrated handwriting display/input device 1, and the processing control unit 2.

The correction/edit system of this embodiment has a position input unit 1a comprising, e.g., a transparent tablet for sequentially inputting position coordinate data indicating strokes of written characters or ruled lines. The processing control unit 2 processes processing information of position coordinate data, for example, creates ruled lines according to a position coordinate data string written and input through the position input unit 1a. The control unit 2 transfers the processed data to the display units 1b and 3, thereby sequentially displaying the written content.

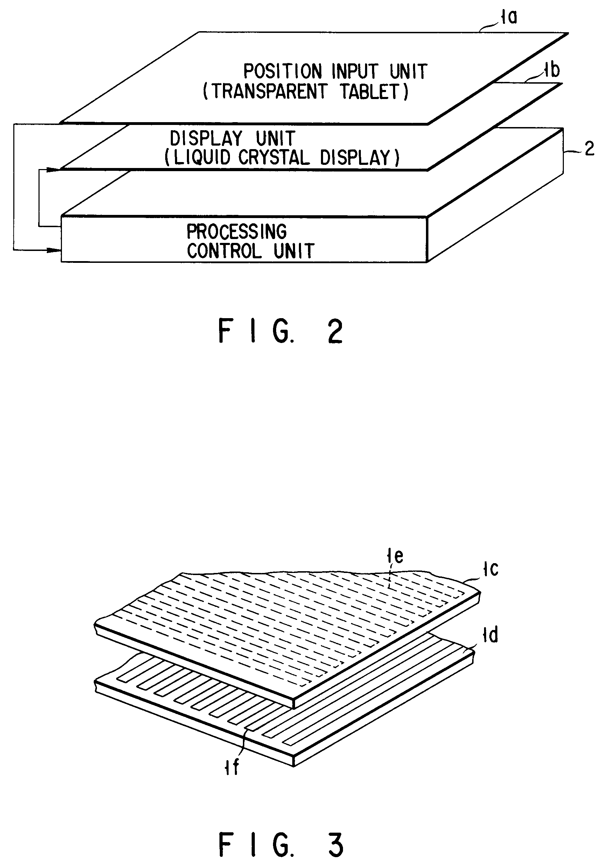

The position input unit 1a and the display unit 1b have coordinate surfaces having the same dimensions, as shown in Fig. 2. The position input unit 1a comprises, e.g., a transparent tablet, and is integrated on the display unit 1b, thus forming the integrated handwriting display/input device 1. Therefore, information displayed on the display unit 1b can be visually confirmed through the position input unit (transparent tablet) 1a.

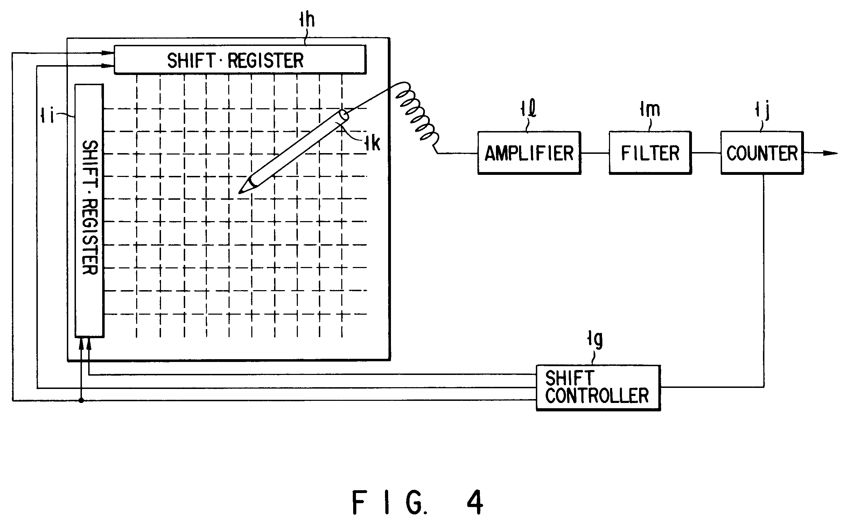

The position input unit 1a will be described below. Fig. 3 shows the structure of the transparent tablet used in the position input unit 1a. The transparent tablet is formed by connecting a pair of glass plates 1c and 1d through an insulating protection film (not shown). A plurality of strip-like transparent electrodes 1e and 1f are respectively formed on one-surface portions of the transparent glass plates 1c and 1d so as to extend to be perpendicular to each other. The transparent electrodes 1e and 1f are sequentially applied with a predetermined voltage by shift registers 1h and 1i which are operated under the control of a shift controller 1g, as shown in Fig. 4.

For example, the predetermined voltage is sequentially and selectively applied to the transparent electrodes 1e, and during a period in which the predetermined voltage is applied to one of the transparent electrodes 1e, the predetermined voltage is applied to all the transparent electrodes 1f perpendicular to the transparent electrode 1e. In other words, every time the predetermined voltage is applied to all the transparent electrodes 1f to scan the transparent electrodes 1f, the predetermined voltage is sequentially applied to the transparent electrodes 1e. Thus, the entire matrix plane (transparent tablet surface) constituted by the transparent electrodes 1e and 1f is scanned in turn.

A counter 1j performs a count operation in synchronism with the above-mentioned scanning operations, and outputs a count value. This count value indicates a coordinate position on the matrix plane (transparent tablet surface) 1a. A pen (stylus pen) 1k is applied to indicate a position on the matrix plane (transparent tablet surface) 1a. The position indicated by the pen 1k is detected by electrostatic coupling of voltages applied upon scanning of the transparent electrodes 1e and 1f. A scanning signal detected by the pen 1k is amplified by an amplifier 1ℓ, and the amplified scanning signal is filtered by a filter 1m to remove a noise signal therefrom. The signal is then sent to the counter 1j as an indicated position signal.

The counter 1j receives the indicated position signal, and outputs a count value at that time as information indicating the position on the transparent tablet surface indicated by the pen 1k.

In the position input unit 1a with the above-mentioned arrangement, when an arbitrary position on the transparent tablet surface is indicated by the pen 1k, a scanning signal (application voltage) for scanning the transparent electrodes 1e and 1f is detected by the pen 1k at that indicated position. The count value of the counter 1j upon detection of the scanning signal is output as position coordinate information corresponding to the position indicated by the pen 1k. When, for example, a figure is drawn on the transparent tablet using the pen 1k, information indicating strokes of the figure is input as a series of positions indicated by the pen 1k, i.e., an indicated position coordinate data string.

Information of a figure written and input through the position input unit 1a in this manner, i.e., a series of position coordinates, are sent to the display units 1b and 3 through the processing control unit 2. The same coordinates on the display unit 1b are displayed according to the series of position coordinates, as will be described later. Under this display control, a figure written on the transparent tablet is simultaneously displayed as a trace of writing. Thus, writing information can be input using the pen 1k as if a figure were drawn on a paper sheet.

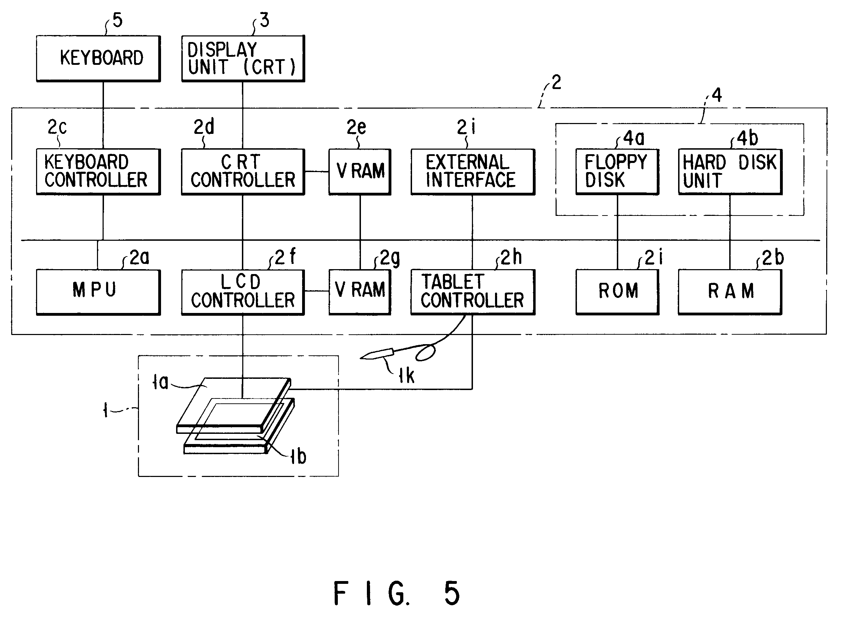

The processing control unit 2 will be described below. Fig. 5 shows the arrangement of the processing control unit 2. The processing control unit 2 comprises an MPU (microprocessor unit) 2a for controlling the overall correction/edit system, a RAM 2b for storing a program and data necessary for the system, an external storage device 4 including a floppy disk 4a and a hard disk unit 4b for properly storing data of the RAM 2b, and system information, a keyboard controller 2c for processing key signals sent from a keyboard 5, a display (CRT) controller 2d for processing data to be displayed on the display unit (CRT) 3, a VRAM (video RAM) 2e for storing display data to be transferred/received to the display (CRT) controller 2d, a display (LCD) controller 2f for processing display data on the display unit 1b, a VRAM (video RAM) 2g for storing display data to be transferred/received to the display (LCD) controller 2f, a tablet controller 2h for controlling position coordinate data sequentially indicating coordinates indicated by the position input unit 1a and the pen 1k, an external interface 2i including a printer interface, an RS-232C interface, a mouse interface, and the like, and a ROM 2j for storing a BIOS (Basic I/O system) and character data.

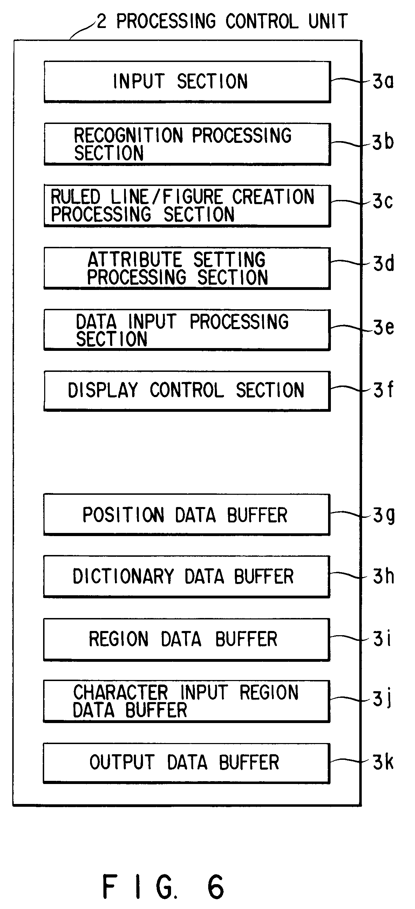

The detailed functional arrangement of the processing control unit 2 will be described below with reference to Fig. 6. The processing control unit 2 is functionally constituted by an input section 3a, a recognition processing section 3b, a ruled line/figure creation processing section 3c, an attribute setting processing section 3d, a data input processing section 3e, a display control section 3f, a position data buffer 3g, a dictionary data buffer 3h, a region data buffer 3i, a character input region data buffer 3j, and an output data buffer 3k.

The input section 3a receives coordinate data indicating a position indicated by the pen 1k from the position input unit 1a according to the state (ON or OFF state) of the pen 1k. The recognition processing section 3b performs character recognition processing of a coordinate data string indicating a character input from the input section 3a when a handwritten character recognition mode is instructed. The ruled line/figure creation processing section 3c performs processing, e.g., normalization of a coordinate data string input from the input section 3a to create lines for forming a figure (a circle, rectangle, triangle, ruled lines) when a figure creation processing mode is instructed. The ruled line/figure creation processing section 3c sets items (regions) to be subjected to a data input operation on the basis of the created figure. The attribute setting processing section 3d sets attributes (character type, character size, display position) for data to be input to items (regions) of the figure created by the ruled line/figure creation processing section 3c. The data input processing section 3e inputs characters, numerals, and the like to the figure created by the ruled line/figure creation processing section 3c according to the attributes set by the attribute setting processing section 3d. The display control section 3f performs display control of the display units 3 and 1b according to the processing content. The display control section 3f controls to display strokes of, e.g., lines written by the pen 1k in real time on the basis of coordinate data input from the input section 3a on regions for displaying figure, and to display a command for instructing a processing content on main and sub item regions.

The position data buffer 3g stores coordinate data input from the input section 3a. The coordinate data stored in the position data buffer 3g are subjected to corresponding processing operations according to the types of data. The dictionary data buffer 3h stores dictionary data transferred from the external storage device 4 or the dictionary ROM 2j applied to the character recognition processing in the recognition processing section 3b. The region data buffer 3i stores various data associated with a table created by the ruled line/figure creation processing section 3c. The character input region data buffer 3j stores various data for displaying a character data input window when a data input operation is performed by the data input processing section 3e. The output data buffer 3k holds data to be displayed on the display units 3 and 1b.

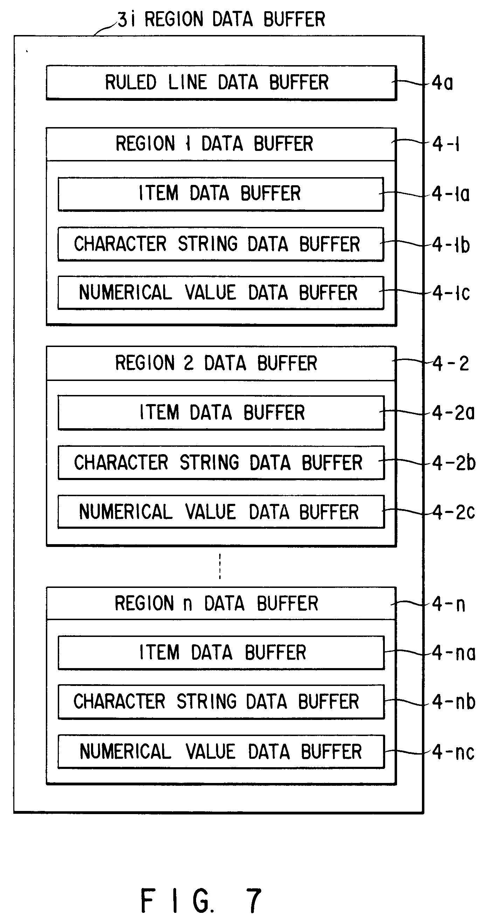

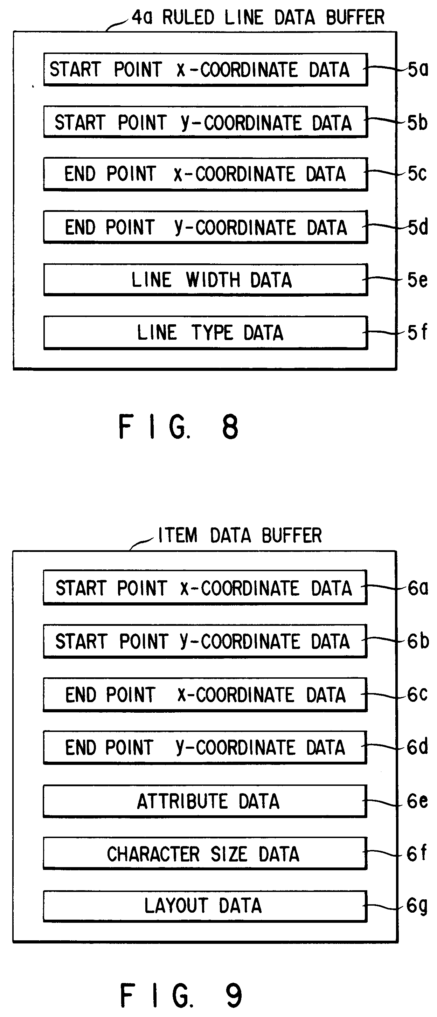

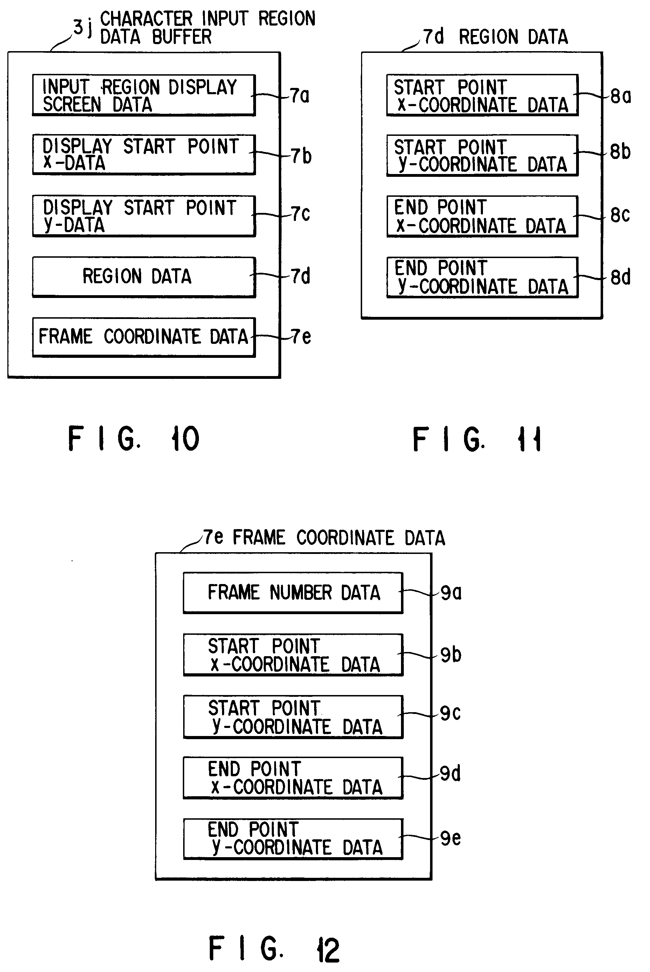

Fig. 7 shows the arrangement of the region data buffer 3i. The region data buffer 3i includes a ruled line data buffer 4a for storing data associated with ruled lines for forming a figure created in figure creation processing by the ruled line/figure creation processing section 3c, and a region 1 data buffer 4-1, a region 2 data buffer 4-2,..., a region n data buffer 4-n for storing data of respective regions in a table. The ruled data buffer 4a is allocated with areas for storing start point x-coordinate data 5a, start point y-coordinate data 5b, end point x-coordinate data 5c, end point y-coordinate data 5d, line width data 5e, line type data 5f, and the like of each ruled line, as shown in Fig. 8. Of the region data buffers 4-1 to 4-n, for example, the region 1 data buffer is constituted by an item data buffer 4-1a having areas for storing start point x-coordinate data 6a, start point y-coordinate data 6b, end point x-coordinate data 6c, end point y-coordinate data 6d, attribute data 6e, character size data 6f, layout data 6g, and the like, as shown in Fig. 9, a character string data buffer 4-1b for holding a character code string, a numerical value data buffer 4-1c for holding numerical value string data, and the like. The areas for the start point x-coordinate data 6a, the start point y-coordinate data 6b, the end point x-coordinate data 6c, and the end point y-coordinate data 6d store the positions of start and end points indicating the position of a region (item) in a table. The areas for the attribute data 6e and the layout data 6g store various pieces of information set in the attribute setting processing by the attribute setting processing section 3d. The character string data buffer 4-1b and the numerical data buffer 4-1c store character data and numerical value data input in the data input processing. The remaining region data buffers 4-2 to 4-n have the same arrangement. Note that the character input region data buffer 3j is allocated with areas for holding input region display screen data 7a for storing information of a display content, display start point x-coordinate data 7b, display start point y-coordinate data 7c, region data 7d indicating a character input window, and frame coordinate data 7e associated with a frame in the character input window, as shown in Fig. 10. Furthermore, the area for the region data 7d includes areas for holding start point x-coordinate data 8a, start point y-coordinate data 8b, end point x-coordinate data 8c, and end point y-coordinate data 8d, which indicate a region of the character input window, as shown in Fig. 11. The area for the frame coordinate data 7e includes areas for holding frame number data 9a, start point x-coordinate data 9b, start point y-coordinate data 9c, end point x-coordinate data 9d, and end point y-coordinate data 9e, as shown in Fig. 12.

The operation of this embodiment will be explained below.

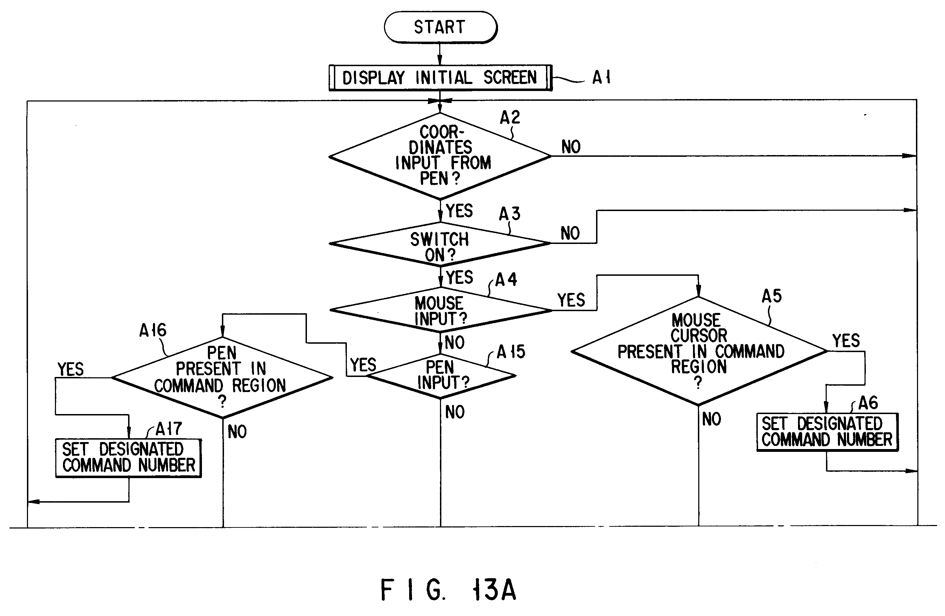

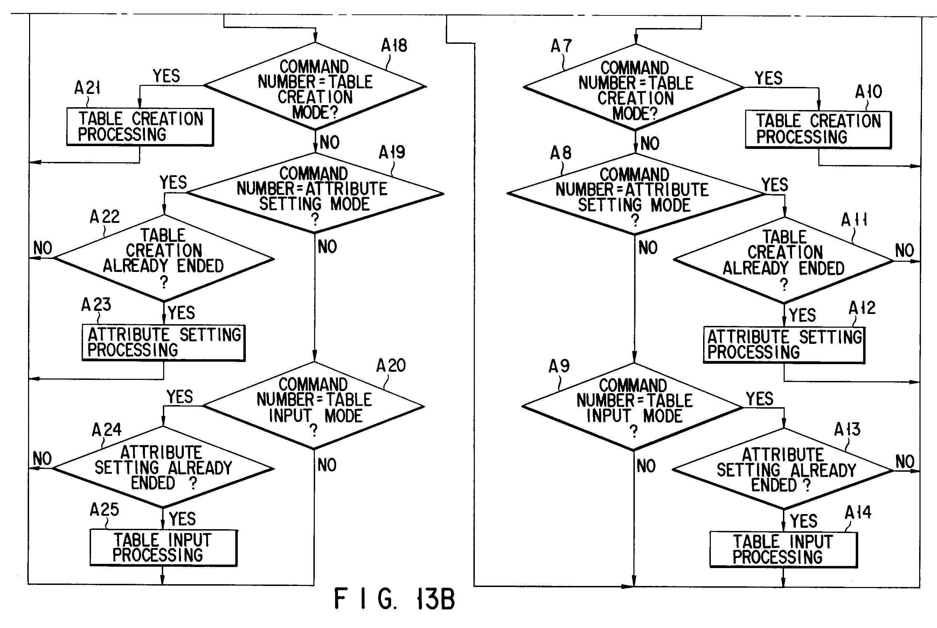

A processing sequence up to creation of ruled lines (figure input frame), a setting operation of processing attributes in each item (region), and a data input operation to the created input frame will be described below with reference to the flow chart shown in Figs. 13A and 13B.

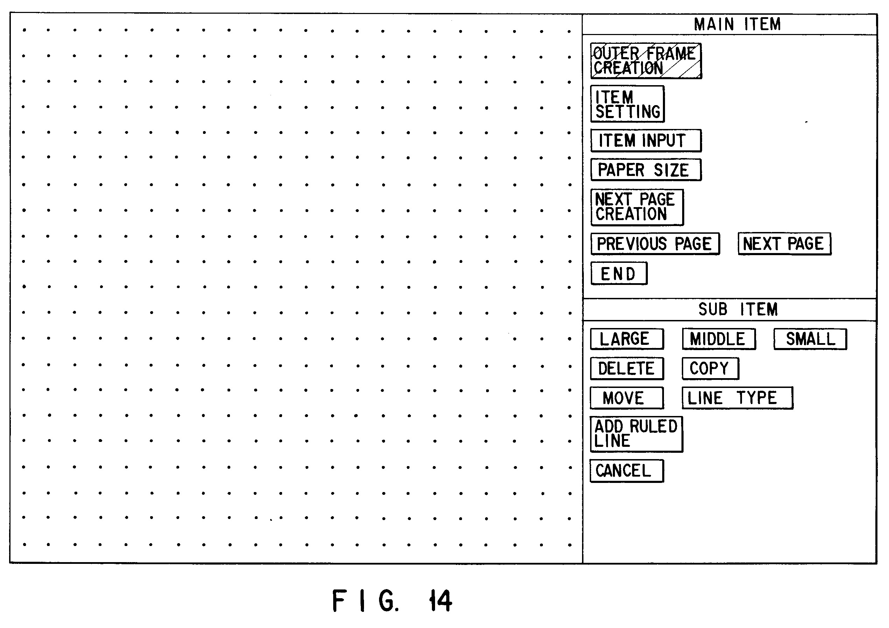

When the power switch of the apparatus of this embodiment is turned on, the display control section 3f causes the display units 3 and 1b to display an initial screen shown in Fig. 14 (step A1). On the right region of the initial screen displayed on each display unit, a plurality of commands for instructing various processing operations are displayed on main and sub item regions so as to facilitate creation of a figure input frame by a user. More specifically, on the main item region, processing commands "outer frame creation" (ruled line creation), "item setting" (attribute setting to a region), "item input" (data input), and the like, are displayed. On the sub item region, sub commands for processing the command selected on the main item region are displayed. When an arbitrary position is indicated by a mouse or the pen 1k, and coordinate data is input (steps A2 and A3), the input section 3a checks if the position indicated by the mouse is present within the command region if the mouse is in an ON state (steps A4 and A5). If YES in step A5, a command number corresponding to the designated command is set (step A6). When coordinate data is input from a mouse coordinate system (when the coordinate data is present outside the command region), the input section 3a discriminates a processing mode indicated by the command number set in advance (steps A7 to A9), and instructs to shift to processing indicated by the command number. For example, when the command "outer frame creation" is selected from the command group on the main item region so as to create an outer frame and ruled lines of a table, the input section 3a instructs to shift to table creation processing with reference to the command number (steps A7 and A10). In the table creation processing, normalization of an outer frame and ruled lines input by the mouse, and a setting operation of normalized region coordinates are performed. The table creation processing will be described in detail later. When the command "item setting" in the main item region is selected, the input section 3a instructs to shift to attribute setting processing if the outer frame and ruled lines have already been created by the table creation processing (steps A8, A11, and A12). In the input attribute setting processing, when data input processing is performed, processing attributes, display layout information, and the like, which indicate character types of characters to be input to regions, and positions of input characters in the regions, can be set in units of regions. The input attribute setting processing will be described in detail later. When the command "item input" in the main item region is selected, the input section 3a instructs data input processing if the table creation processing and the attribute setting processing have already been executed (steps A9, A13, and A14). In the data input processing, characters and numerical values are input to the regions of items of the created table.

When an arbitrary position on the transparent tablet surface is indicated by the pen 1k, and coordinate data is input (step A15), the input section 3a checks if the position indicated by the pen 1k is present within the command region if the pen 1k is in an ON state (steps A2, A3, A15, and A16). If YES in step A16, a command number corresponding to the designated command is set (step A17). When coordinate data is input from the position input unit 1a (when the coordinate data is present outside the command region), the input section 3a discriminates a processing mode indicated by the command number set in advance (steps A18 to A20), and instructs to shift to processing indicated by the command number. For example, when the command "outer frame creation" is selected from the command group on the main item region so as to create an outer frame and ruled lines of a table, the input section 3a instructs to shift to the table creation processing with reference to the command number (steps A18 and A21). In the table creation processing, normalization of an outer frame and ruled lines input by hand writing, and a setting operation of normalized region coordinates are performed. The table creation processing will be described in detail later. When the command "item setting" in the main item region is selected, the input section 3a instructs to shift to the attribute setting processing if the outer frame and ruled lines have already been created by the table creation processing (steps A19, A22, and A23). In the input attribute setting processing, when data input processing is performed, processing attribute information, display layout information, and the like, which indicate character types of characters to be input to regions, and positions of input characters in the regions, can be set in units of regions. The input attribute setting processing will be described in detail later. When the command "item input" in the main item region is selected, the input section 3a instructs the data input processing if the table creation processing and the attribute setting processing have already been executed (steps A20, A24, and A25). In the data input processing, characters and numerical value are input to the regions of items of the created table.

The table creation processing, attribute setting processing, and table (data) input processing will be described in detail below.

(1) Table Creation Processing

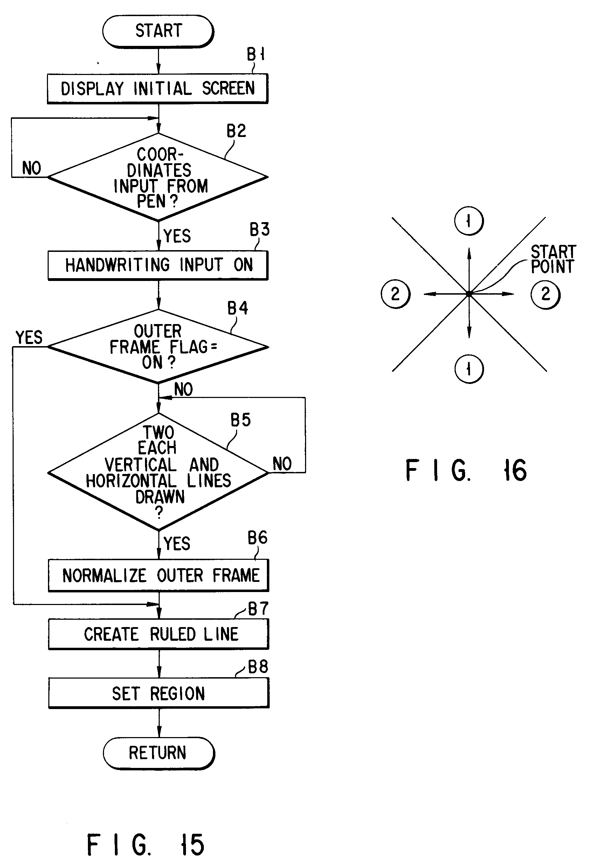

Fig. 15 is a flow chart showing the processing sequence of this processing.

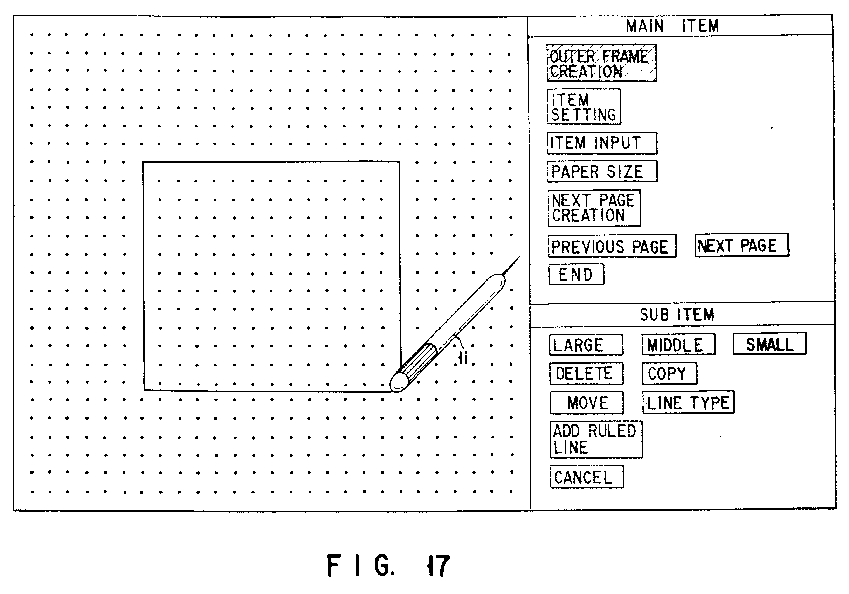

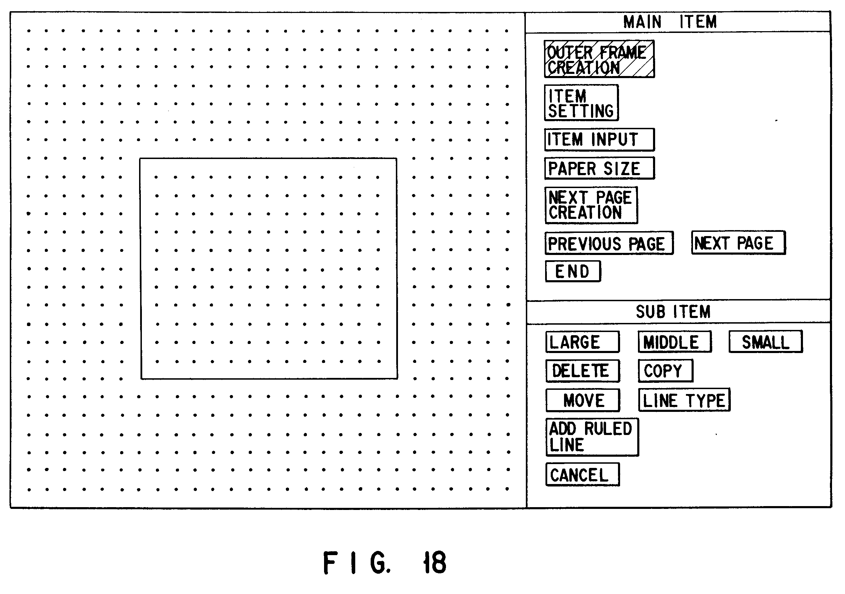

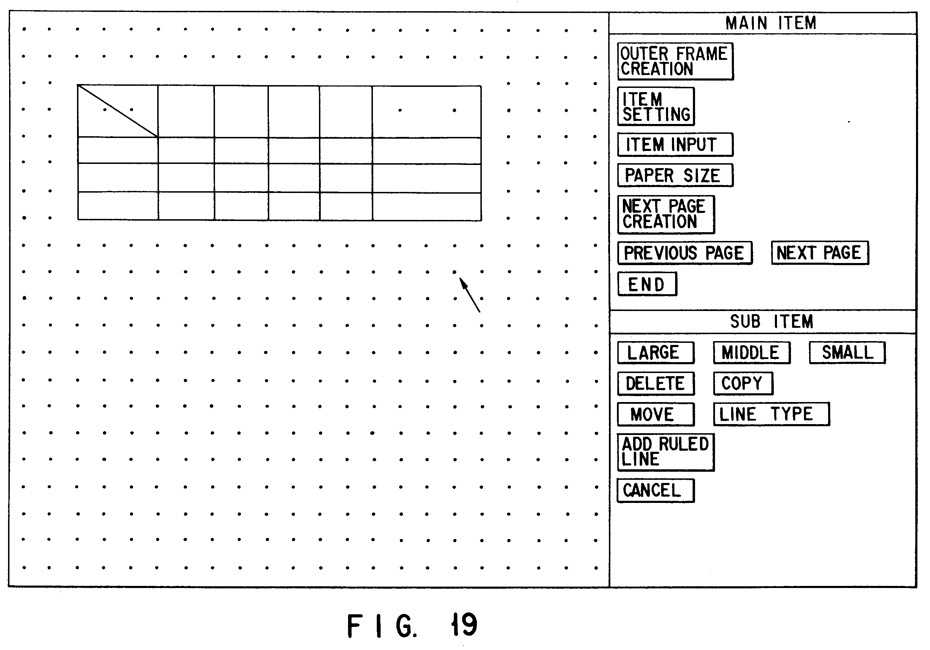

The input section 3a detects the ON state of the pen 1k for indicating a position on the transparent tablet surface of the position input unit 1a. If it is determined that position coordinate data input from the position input unit 1a at that time indicates the command "outer frame creation" in the command group on the main item region displayed on the right portion on the display screen (when a command number indicating the table creation processing is set), the ruled line/figure creation processing section 3c is enabled to start the table creation processing. When the table creation processing is started, the display control section 3f sets a table creation display screen, and displays a command group for the table creation processing on the sub item region (step B1). The input section 3a checks if coordinates of the pen 1k indicating a position on the tablet surface of the position input unit 1a is detected (step B2). If YES in step B2, the input section 3a enables a handwriting input mode, so that a handwriting display is performed using an input coordinate data string (step B3). First, the outer frame of a table is created. In this embodiment, the outer frame is created by two vertical ruled lines and two horizontal ruled lines. Vertical and horizontal lines are discriminated as follows. As shown in Fig. 16, if the direction of a straight line connecting the start and end points of input coordinate data representing a ruled line is 1, a vertical line is determined; if it is 2, a horizontal line is determined. After the vertical and horizontal lines are created, the ruled line/figure creation processing section 3c sets, in an ON state, an outer frame flag indicating that the outer frame has already been created, and normalizes the outer frame (steps B4 and B5). The outer frame is normalized on the basis of the positions of grids displayed on an input region on the display screen. A first input line is aligned with the grids. When a line, e.g., a vertical line, is aligned with the grids, the x-coordinate of a grid closest to the x- and y-coordinates of the start point is determined as the x-coordinate of a normalized line. The y-coordinate value of a grid having the same x-coordinate as that of the above-mentioned grid, and closest to the y-coordinate of the end point is compared with the y-coordinate of the grid closest to the start point, the smaller one is determined as the y-coordinate of the start point of the normalized line, and the larger one is determined as the y-coordinate of the end point, thus normalizing the input line to a straight line. In the case of a horizontal line, the y-coordinate of a grid closest to the x- and y-coordinates of the start point is determined as the y-coordinate of a normalized line. The x-coordinate value of a grid having the same y-coordinate as that of the above-mentioned grid, and closest to the x-coordinate of the end point is compared with the x-coordinate of the grid closest to the start point, the smaller one is determined as the x-coordinate of the start point of the normalized line, and the larger one is determined as the x-coordinate of the end point, thus normalizing the input line to a straight line. Based on this principle, the first input line is aligned with the grids. If the line aligned with the grids is a vertical line, the y-coordinates of the start and end points of this line are respectively determined as the upper and lower y-coordinates of the outer frame. The x-coordinate value of a line, which is input next, and is aligned with the grids, is compared with the x-coordinate value of the line, which is input first, and is aligned with the grids, the smaller one is determined as the left x-coordinate of the outer frame, and the x-coordinate of the end point of the line having the larger x-coordinate is determined as the right x-coordinate of the outer frame, thereby normalizing the outer frame. If the line aligned with the grids is a horizontal line, the x-coordinates of the start and end points of this line are respectively determined as left and right x-coordinates of the outer frame. The y-coordinate value of a line, which is input next, and is aligned with the grids, is compared with the y-coordinate value of the line, which is input first, and is aligned with the grids, the smaller one is determined as the upper y-coordinate of the outer frame, and the y-coordinate of the end point of the line having the larger y-coordinate is determined as the lower y-coordinate of the outer frame, thereby normalizing the outer frame. Figs. 17 and 18 show display frames when the outer frame creation processing is performed. As shown in Fig. 17, when a line is drawn on the tablet using the pen 1k, a coordinate data string is input from the input section 3a, and the display control section 3f causes the display unit 1b to display the handwritten data using the coordinate data string. After the coordinate data indicating two each vertical and horizontal lines are input, the display control section 3f displays an outer frame normalized by the ruled line/figure creation processing section 3c, as shown in Fig. 18. The coordinate data indicating the position (the start and end points of the lines) of the outer frame obtained upon normalization of the ruled line/figure creation processing section 3c are stored in the coordinate storage areas 5a to 5d in the ruled line data buffer 4a. When the outer frame data is created in this manner, ruled lines are created in the outer frame so as to create item regions as needed (steps B7 and B8). The ruled lines are created by writing lines in the frame in the same manner as in the outer frame creation. When a coordinate data string indicating a ruled line in the outer frame is input, the ruled line/figure creation processing section 3c normalizes the ruled line. The ruled line is normalized as follows. In the case of a vertical line, the x-coordinate value of a grid closest to the x-coordinate of the start point of an input line is determined as the x-coordinate of the normalized ruled line. As for the y-coordinates, the y-coordinates of horizontal lines (including the ruled lines of the outer frame) closest to the y-coordinates of the start and end points of the input line are used. In this case, the smaller y-coordinate value is determined as the y-coordinate of the start point of the normalized line, and the larger y-coordinate value is determined as the y-coordinate of the end point of the normalized line, thus normalizing the input ruled line. In the case of a horizontal line, the y-coordinate value of a grid closest to the y-coordinate of the start point of an input line is determined as the y-coordinate value of the normalized ruled line. As for the x-coordinates, the x-coordinates of vertical lines (including the ruled lines of the outer frame) closest to the y-coordinates of the start and end points of the input line are used. In this case, the smaller x-coordinate value is determined as the x-coordinate of the start point of the normalized line, and the larger x-coordinate value is determined as the x-coordinate of the end point of the normalized line, thus normalizing the input ruled line. In this embodiment, if a ruled line having the same coordinate values as those of the normalized ruled line is input, the data input later are ignored as error data. The ruled line data normalized as described above are stored in the ruled line data buffer 4a in the region data buffer 3i shown in Fig. 7. A buffer for one ruled line in the ruled line data buffer 4a is divided into vertical and horizontal line buffers. In the case of a vertical line, buffers in units of ruled lines in the ruled line data buffer 4a store ruled line data in the ascendant order of x-coordinate values. If ruled line data have the same x-coordinate value, the buffers store the ruled line data in the ascendant order of y-coordinate values of start points. In the case of a horizontal line, ruled line data are stored in the ascendant order of y-coordinate values, and if the ruled line data have the same y-coordinate value, they are stored in the ascendant order of the x-coordinate values of start points. Fig. 19 shows an example of a table obtained by the ruled line creation processing. After the ruled line creation processing is performed in this manner, item region setting processing is performed (step B9). An item region is determined by crossing points of vertical and horizontal ruled lines, and the start and end point data of an item region frame. The start point of an item region frame is searched as follows. If the y-coordinate of the horizontal buffer falls within a coordinate range between a start point Y and an end point Y-1 in the vertical line buffer, which stores x-coordinates falling within a coordinate range between a start point X and an end point X-1 stored in the horizontal line buffer of the ruled line data buffer 4a, a contact point (crossing point) therebetween is determined as the start point of the item region frame. The start point search processing of item regions is performed for all the horizontal lines. The end point of an item region frame is searched as follows. If the y-coordinate of the horizontal line buffer falls within a coordinate range between a start point Y-1 and an end point Y stored in the vertical line buffer, which stores x-coordinates falling within a coordinate range between a start point X-1 and an end point X stored in the horizontal line buffer of the ruled line data buffer 4a, a contact point (crossing point) therebetween is determined as the end point of the item region frame. The searched start and end point coordinate data are stored in the areas of the coordinate data 6a to 6d in the item data buffer as coordinate data indicating item positions, i.e., as coordinate data in the item data buffer. Thus, the region setting processing is ended, and the flow returns to the main routine.

**(2) Attribute Setting Processing**

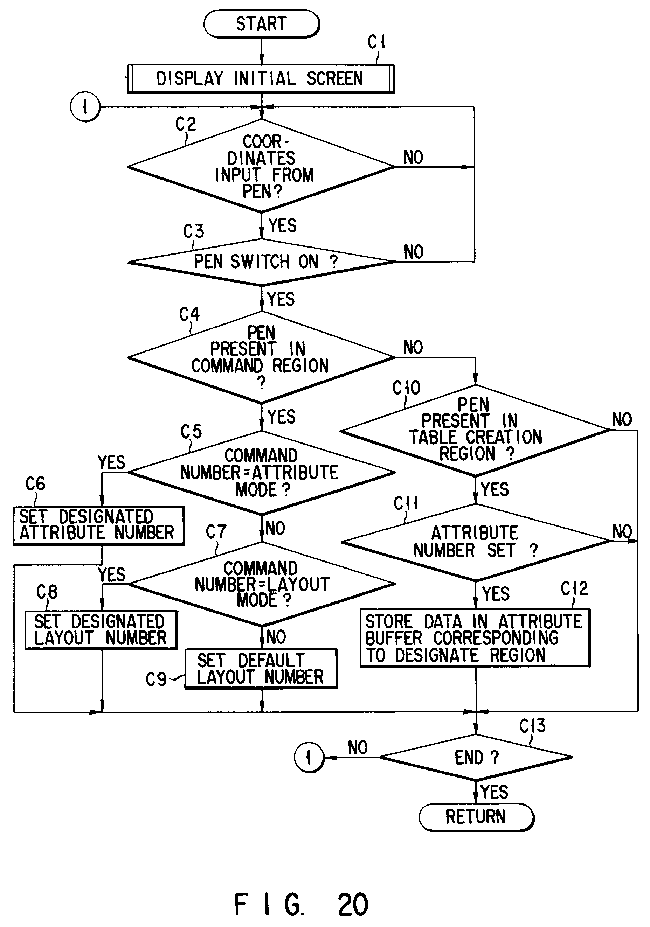

Fig. 20 is a flow chart showing the processing sequence of this processing.

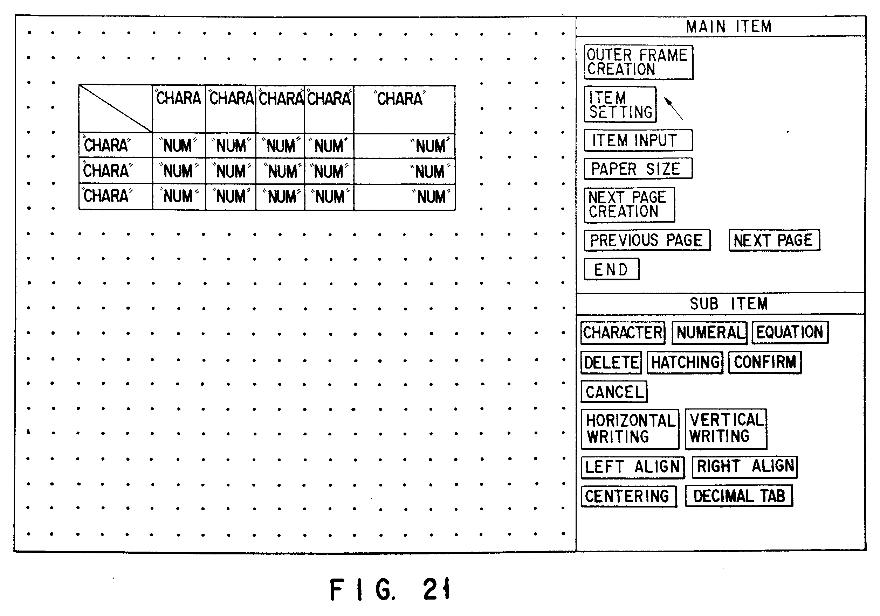

When the command "item setting" is selected from commands in the main item region on the frame where the table is created, as shown in Fig. 19, the attribute setting processing section 3d is started. The display control section 3f causes the display unit 1b to display attribute information commands, and layout information commands on the command region of the sub item region as an initial frame for setting attribute information (step C1). The input section 3a checks if the coordinates of the pen 1k indicating a position on the tablet surface of the position input unit 1a are detected, and the switch of the pen 1k is in an ON state (steps C2 and C3). The input section 3a then checks if the position indicated by the pen 1k is present within the command region (step C4). When the item setting processing is performed, an attribute to be set in each region of a table is selected from the sub item region (step C2). In this case, the attribute indicates a character type such as a character, numeral, or the like. When a handwritten character is to be recognized, whether an input character is a normal character or a numeral is designated to narrow a range of a dictionary to be used in character recognition, thereby eliminating recognition errors. When the attribute (e.g., "character", "numeral", or the like) is selected from the sub item region, and an attribute mode is detected based on a command number (step C5), the attribute setting processing section 3d sets a flag corresponding to the designated attribute in an ON state (step C6). The display control section 3f reversal-displays the command of the selected attribute on the display screen. The layout of input characters in a region is then set. When an arbitrary command is selected from the layout information commands ("dictionary", "vertical writing", "left align", "right align", and the like) in the sub item region (step C7), the attribute setting processing section 3d sets a flag corresponding to a layout mode of the selected command in an ON state (step C8). When a command for indicating display layout information in the sub item region is not selected, the attribute setting processing section 3d sets a flag corresponding to a default display layout information command in an ON state (step C9). After the attribute information and display layout information are set in this manner, a region which is to be set with the above-mentioned information is selected. The attribute setting processing section 3d discriminates a region to be set of the table on the basis of the coordinate value designated by the pen 1k, and the start point x-coordinate data 6a, the start point y-coordinate data 6b, the end point x-coordinate data 6c, and the end point y-coordinate data 6d in the item data buffers 4-1a to 4-1n in the region 1 to n data buffers 4-1 to 4-n in the region data buffer 3i (step C10). If the position designated by the pen 1k is present in a table creation region, and the attribute number is set (step C11), the attribute information command corresponding to the ON flag is stored in the attribute data 6e in an item data buffer corresponding to the designated region, and the layout information command corresponding to the ON flag is stored in the layout data 6g (step C12). More specifically, the attribute information and display layout information selected in advance are set in correspondence with a designated region in the table. Fig. 21 shows an example of a display state wherein attributes are set in correspondence with the respective regions. In Fig. 21, a mark "chara" is displayed in the regions in which an attribute is set to input characters, and a mark "num" is displayed in the regions in which an attribute is set to input numerals, so that the set attribute information commands can be identified at a glance on the display screen. As for the display layout information commands, in a region set with a "left align" command, the mark of the attribute information command is displayed at the left side in the region. In a region set with a "centering" command, the mark of the attribute information command is displayed at the center of the region. In this manner, the attribute information commands and the layout information commands have corresponding flags, and flags are kept ON as long as no other command is selected. For this reason, when the same attribute information command and display layout information command are set in a plurality of regions, the attributes can be set by continuously designating the regions. In this manner, the attribute setting processing is ended, and when a command "end" in the main item region is selected (step C13), the flow returns to the main routine.

(3) Data Input Processing

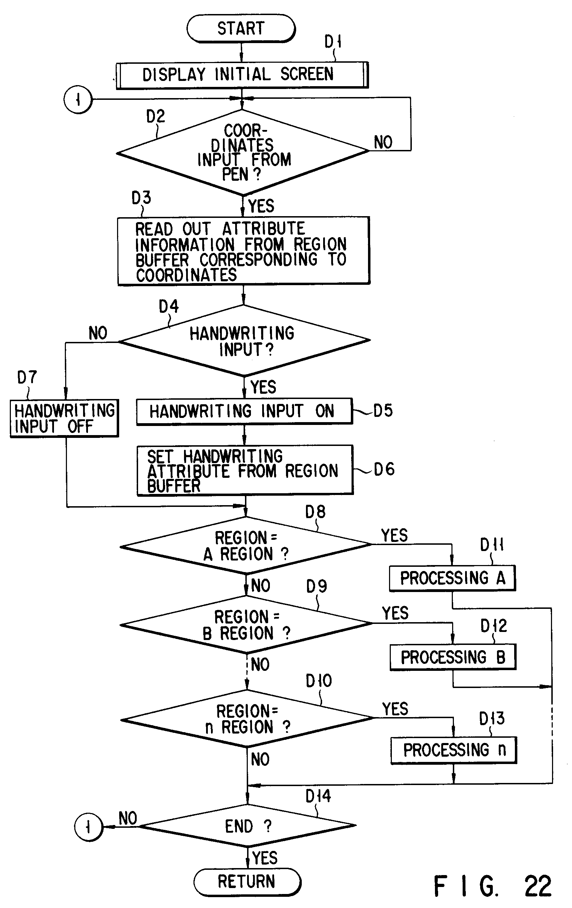

Fig. 22 is a flow chart showing the processing sequence of this processing.

When the command "item input" is selected from the commands in the main item region on the frame where the attributes are set, as shown in Fig. 21, the data input processing section 3e is started. The display control section 3f displays an initial frame for performing a data input operation on the sub item region (step D1). When an item (region) to be subjected to the data input operation is designated by the pen 1k (step D2), the data input processing section 3e discriminates an item designated as an object of the data input operation on the basis of the designated input coordinate values, and the start point x-coordinate data 6a, the start point y-coordinate data 6b, the end point x-coordinate data 6c, and the end point y-coordinate data 6d stored in the region data buffer 3i. The data input processing section 3e reads out attribute data set in advance for the designated region from the attribute data 6e stored in the item data buffer of the designated item (step D3). If the readout attribute data is a handwriting input command, a state enabling execution of the handwriting input operation is set (a handwriting input mode is ON) (step D5), and a handwriting attribute referred upon recognition processing according to an attribute is set (step D6). On the other hand, if the readout attribute data is not the handwriting input command, a state disabling the handwriting input operation is set (the handwriting input mode is OFF) (step D7). Then, processing is executed for the designated region according to an attribute set upon setting of an item (attribute) (steps D8 to D13). The data input processing is ended when the "end" command in the main item region is selected (step D14), and the flow returns to the main routine.

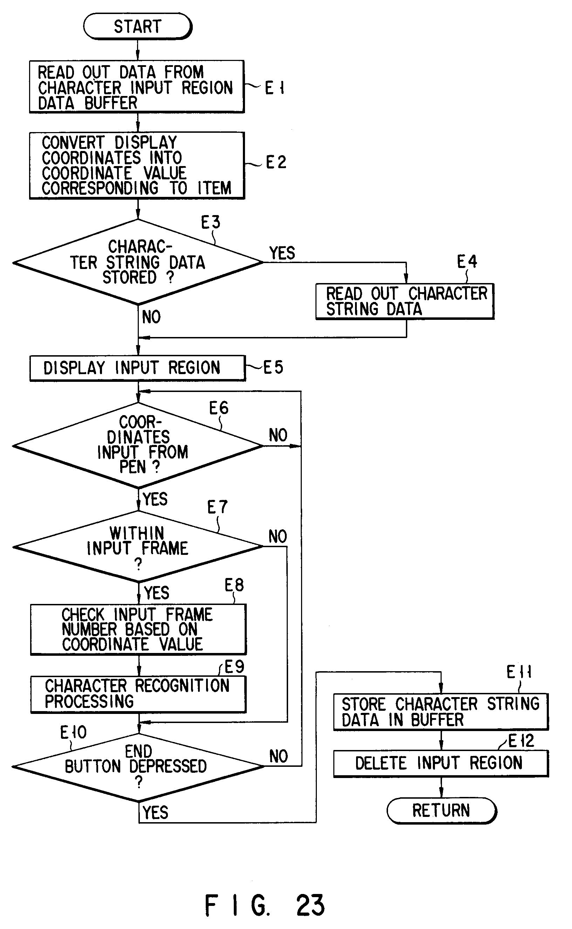

Processing executed when a data input operation is performed for a region set with character input processing ("character" is selected) upon setting of an item will be described below with reference to the flow chart shown in Fig. 23.

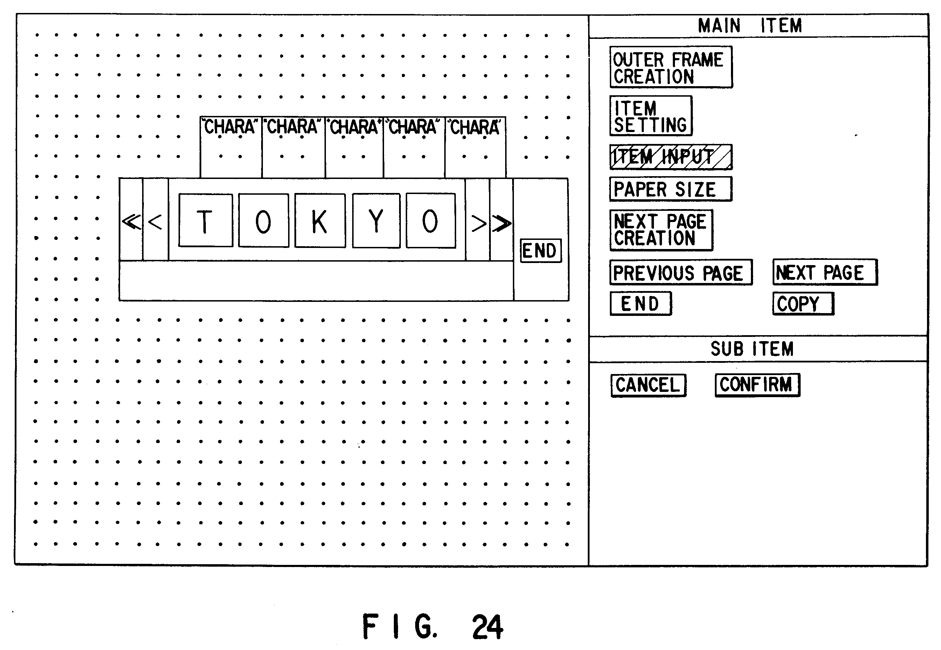

When an item set with character input processing is designated as an object of the data input operation, the data input processing section 3e reads out data (stored in the data buffers 7a to 7e shown in Fig. 10) stored in the character input region data buffer 3j (step E1), and converts the display start point x-coordinate data 7b and the display start point Y-coordinate data 7c into coordinates (display coordinate values) corresponding to the designated item. More specifically, the position on the display frame where a character input window for inputting data to the designated item is displayed is obtained. If data is stored in the character string data buffer of the designated item (region) (step E3), the data input processing section 3e reads out the character string data (step E4). The display control section 3f displays the character input window shown in, e.g., Fig. 24 on the basis of the data read out from the character input region data buffer 3j, and the readout character string data so as to have the display coordinate values obtained by coordinate conversion by the data input processing section 3e as a display start point (step E5).

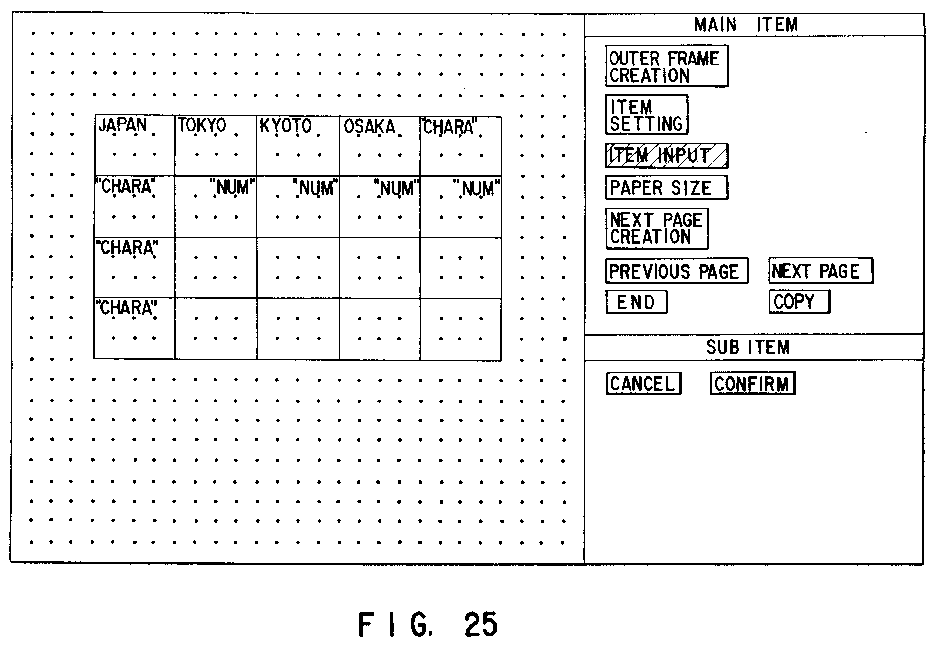

Note that the display coordinate value corresponding to an item designated as a data input object is set to be a value, which allows the character input window to be displayed below the designated item (see Fig. 24). However, when the window cannot be displayed below the designated item, the display coordinate value is converted to a value, which allows the window to be displayed above the item. The character input window is provided with an end button ("end") for inputting an instruction for deleting the window upon completion of the character input operation. When coordinate data whose position is indicated by the pen 1k is input, the data input processing section 3e checks based on data in the buffer for storing the frame coordinate data 7e if the coordinate data falls within the input frame (step E7), and also checks to which input frame an input operation is made (checks an input frame number) (step E8). The recognition processing section 3b performs character recognition processing of a coordinate data string representing a handwritten character using recognition dictionary data stored in the dictionary data buffer 3h (step E9). The result of the handwritten character recognition processing executed herein is displayed in the frame subjected to the handwriting input operation by the display control section 3f. After required characters are input, and the end button of the character input window is depressed (step E10), the data input processing section 3e stores the character codes of the recognized characters in the character string data buffers 4-1b to 4-nb of the corresponding regions (step E11). The display control section 3f deletes the character input window (step E12), and the characters input to the designated item are displayed on the basis of the layout data 6g stored in the corresponding item data buffers 4-1a to 4-na. Fig. 25 shows a display frame in a state wherein characters are input to some regions of the table. Upon completion of the character (data) input processing, the flow returns to the main routine.

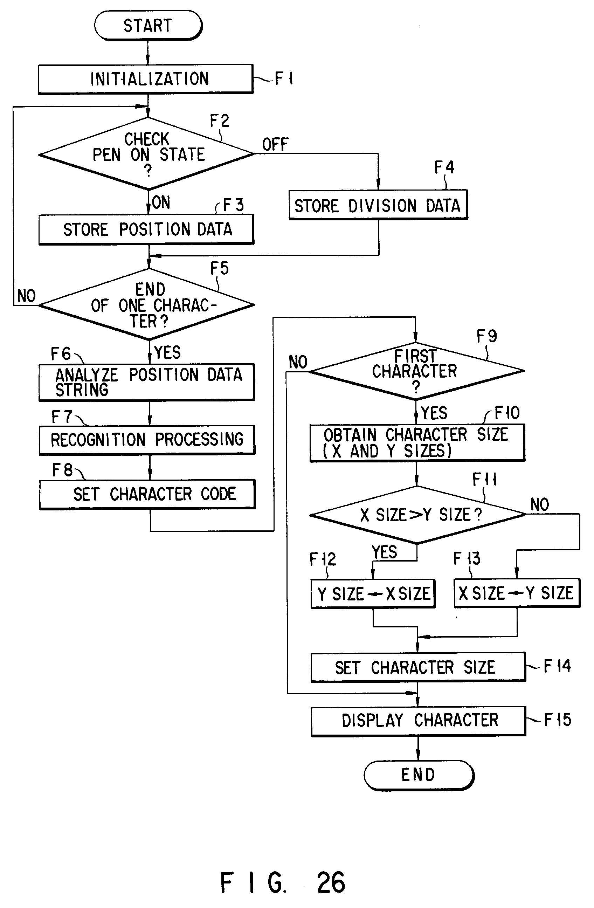

The handwritten character recognition processing executed based on coordinate data input from the position input unit 1a by writing a character on the transparent tablet will be described below with reference to the flow chart shown in Fig. 26.

First, the processing control unit 2 initializes input data storage buffers when a data input operation is performed (step F1). The processing control unit 2 checks the ON state of the pen 1k (step F2). When the pen 1k is in the ON state, the input section 3a fetches coordinate data of a position indicated by the pen 1k input from the position input unit 1a, and stores it in the position data buffer 3g (step F3). The storage operation of the coordinate data is sequentially performed until division data indicating that the entire coordinate data string for one character is input is informed to the position data buffer 3g. The division data is stored in the position data buffer 3g when the pen 1k is set in an OFF state, and the OFF state exceeds a predetermined period of time, or when the pen 1k leaves a set recognition frame, and is set in the OFF state outside the frame (step F4). The input operation of coordinate data is repetitively performed until it is recognized based on the division data that the entire coordinate data string representing a character pattern for one character is input (step F5). The input coordinate data for one character are stored in the position data buffer 3g, and are also transferred to the output data buffer 3k. The input coordinate data are simultaneously displayed as handwritten pattern information at the predetermined position on the display unit 3. When the coordinate data string for one character is stored in the position data buffer 3g in this manner, the recognition processing section 3b analyzes the coordinate data string, and performs character recognition processing of a character handwritten by the pen 1k (steps F6 and F7).

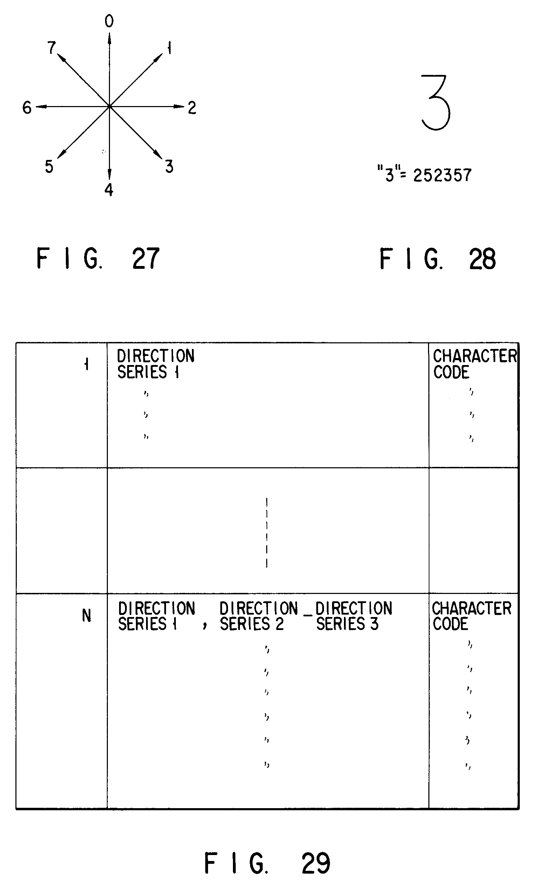

The character recognition processing is performed as follows. For example, the coordinate data string is divided into writing strokes by determining breaks of strokes on the basis of the distances between position coordinate data, and the writing strokes are converted into a series of values indicating directions representing features. The values indicating directions are given as values quantized into eight directions (direction values), as shown in Fig. 27. A series of direction values corresponding to the coordinate data string representing the writing strokes are obtained, and when the same directions (direction values) repetitively appear, these direction values are represented by one direction value to compress data. In this manner, position coordinate data representing writing strokes are converted into direction values. According to this quantization, a numeral "3" is converted into direction values "252357", as shown in Fig. 28.

With this processing, character data written and input through the position input unit 1a is expressed as direction values in units of writing strokes thereof. The recognition processing section 3b collates information of the series of direction values obtained in this manner with recognition dictionary data, stored in the ROM 2j and supplied through the dictionary data buffer 3i, for performing character recognition processing, thus recognizing a character. The recognition dictionary data used in the character recognition processing express the features of strokes constituting characters to be recognized as a series of direction values, and are classified in units of the number of strokes constituting characters in correspondence with character codes, as shown in, e.g., Fig. 29. Dictionary data used in the character recognition processing are set according to an attribute set by the attribute setting processing section 3d. The recognition processing section 3b looks up the dictionary data, and sets a character code corresponding to the features of the strokes of coordinate data input by the handwriting operation as a recognition result (step F8). If the input coordinate data correspond to the first character, a character size for performing a character display is set. More specifically, the character sizes in the x-and y-directions of a handwritten character are detected on the basis of the input coordinate data string (step F10). The X and Y sizes are compared with each other (step F11), and a character size is set in correspondence with a larger one of the X and Y sizes according to the comparison result (steps F11 to F14). The display control section 3f displays a character according to the set character size (step F15). When the input coordinate data correspond to the second or subsequent character, processing for obtaining the character size is not performed, and a character is displayed according to the character size set based on the data of the first character. In this manner, when a table is created, creation of an outer frame and ruled lines, and a data input operation can be directly performed using the pen 1k at the position input unit 1a. In addition, when processing attributes and layout information are set in the respective regions in the table, since processing according to the regions can be executed, efficiency can be improved in terms of the processing speed and input efficiency. When a mark indicating a set attribute is displayed in a corresponding region in the table, a setting content can be grasped at a glance when a data input operation is performed. When characters are input in a data input operation, the character data input window is displayed, and characters are input using the window. Thus, a user can input (write) characters having a certain size independently of the sizes of items (regions) in the table. Thus, recognition errors caused by characters written in a small size in the character recognition processing can be prevented.

(4) Paper Size Processing

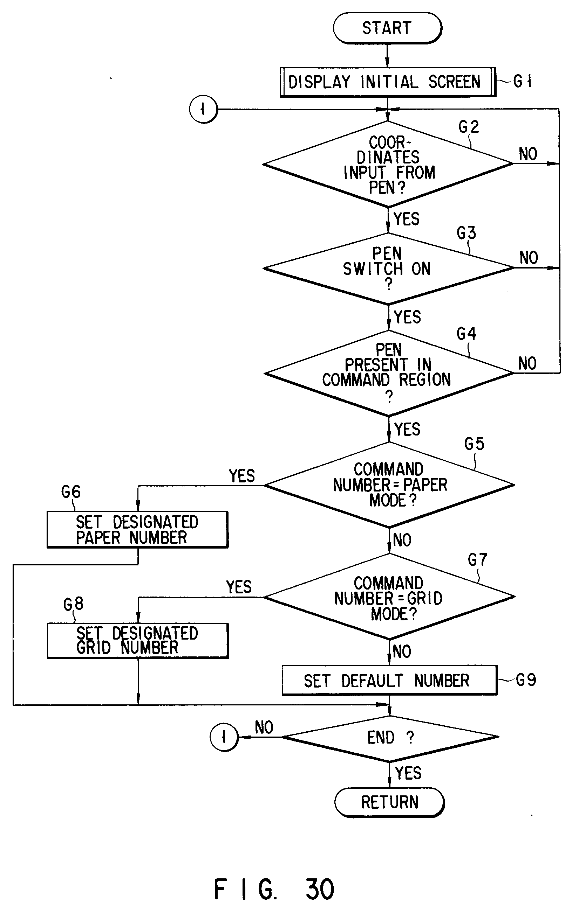

Fig. 30 is a flow chart showing a sequence of this processing.

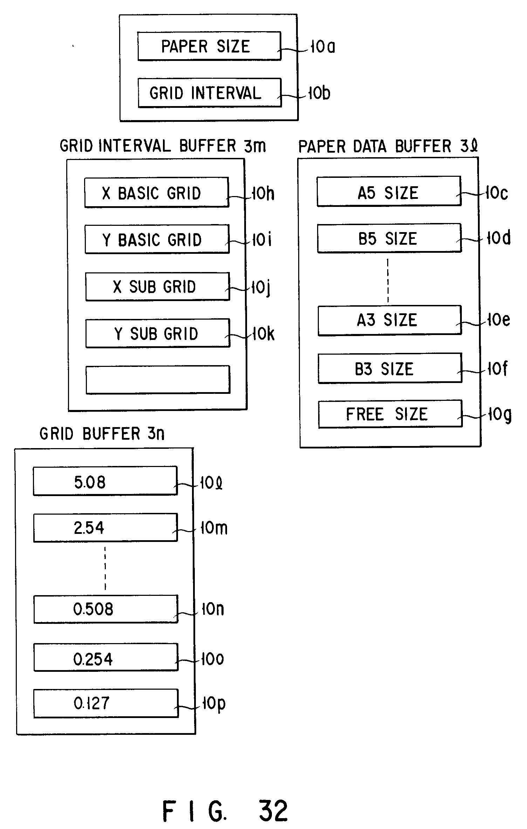

When the input section 3a detects the ON state of the pen 1k indicating a position on the tablet surface of the position input unit 1a, and it is determined that position coordinate data input from the position input unit 1a at that time indicates a command "paper size" of the command group in the main item region displayed on the right portion on the display screen, the paper size processing shown in Fig. 30 is started. When the paper size processing is started, the display control section 3f displays a paper size setting frame on the display screen, and displays a command group for setting a paper size on the sub item region (step G1). The input section 3a checks if the coordinates of the pen 1k for indicating a position on the tablet surface of the position input unit 1a are detected, the switch of the pen 1k is in the ON state (steps G2 and G3), and the position indicated by the pen 1k is present within the command region (step G4). When a paper size is set, selection items of "paper size" and "grid interval" modes are output from the sub item region to the sub items, and a paper size mode 10a or a grid interval mode 10b is displayed based on a selected command number. If "paper size" is selected from these items, and it is determined that a flag of the designated mode is ON (step G5), a paper size data buffer 3ℓ ("A5", "B5") sets the flag corresponding to the designated mode in an ON state (step G6). In order to determine how to layout display input characters in a region, the "grid interval" command in the sub item region is selected. Then, setting items 10h to 10k shown in Fig. 32 are displayed. In this grid setting processing (step G7), when the pen 1k is moved outside a frame from the selected item while the switch of the pen 1k is ON, interval numerical values 10ℓ to 10p indicating grid setting intervals are displayed. When the switch of the pen 1k is turned off, a flag corresponding to the finally selected mode is set in an ON state (step G8).

When neither paper size nor grid interval of the paper size data buffer are selected, default paper size and grid interval are set in an ON state as paper size data (step G9).

(5) Display Enlargement/reduction Processing

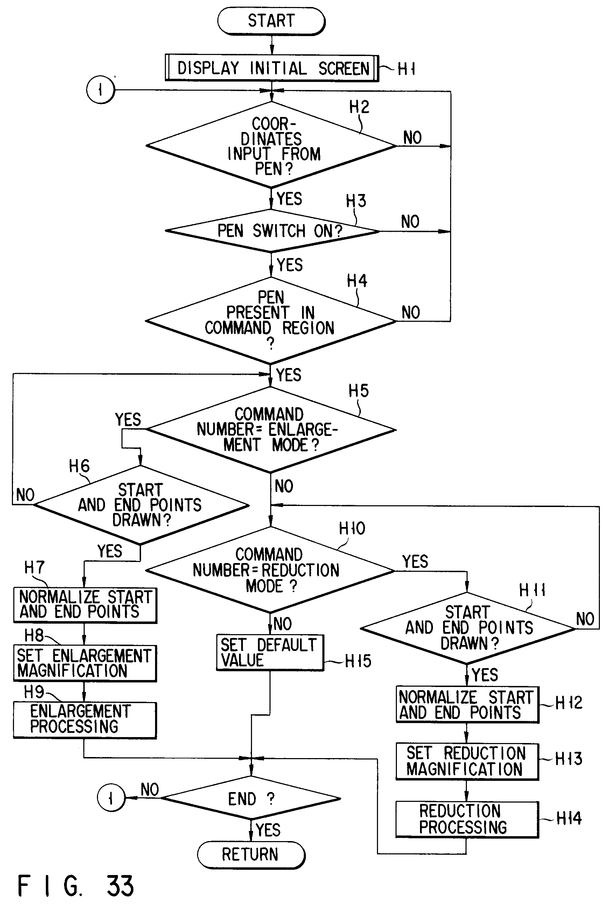

Enlargement/reduction processing, of a display frame used in display processing of the two display units 3 and 1b, in the display control section 3f for displaying coordinate data handwritten on the tablet and input from the position input unit 1a will be described below with reference to the flow chart shown in Fig. 33.

Enlargement processing using the display unit 1b will be described first. When the input section 3a detects the ON state of the pen 1k for indicating a position on the tablet surface of the position input unit 1a, and if it is determined that coordinate data input from the position input unit 1a indicates an "enlargement/reduction" command of the command group in the main item region displayed on the right portion of the display screen, the enlargement/reduction processing shown in Fig. 33 is started. When the enlargement/reduction processing is started, an enlargement/reduction setting command group is displayed on the sub item region (step H1). The input section 3a checks if the coordinates of the pen 1k for indicating the position on the tablet surface of the position input unit 1a are detected, and if the switch of the pen 1k is in the ON state (steps H2 and H3). Then, the input section 3a checks if the position indicated by the pen 1k falls within the command region (step H4). When enlargement processing is performed, selection items of "enlargement processing" and "reduction processing" are displayed from the sub item region to the sub items. If "enlargement processing" of these items is selected, and if it is determined that the designated flag is ON (step H5), the pen 1k is moved from the main and sub item regions to the table creation region, and a start point and an end point where the switch is turned on and off, respectively, are stored as start point x-coordinate data 11c, start point y-coordinate data 11d, end point x-coordinate data 11e, and end point y-coordinate data 11f in an enlargement zoom data buffer on the basis of a coordinate data string input from the position input unit 1a, and at the same time, an enlargement region is displayed by straight lines connecting the start and end points in a rectangular pattern (step H6). An enlargement display region is calculated in correspondence with the ratio of the x-direction to the y-direction of an effective table creation region (a display frame effective area other than the main and sub item regions) with reference to the start point x-coordinate data 11c and the start point y-coordinate data 11d of the start point x-coordinate data 11c, the start point y-coordinate data 11d, the end point x-coordinate data 11e, and the end point y-coordinate data 11f, which define the start and end points of the enlargement region (step H7).

The start point x-coordinate data 11c, the start point y-coordinate data 11d, the end point x-coordinate data 11e, and the end point y-coordinate data 11f which are normalized for a display on the basis of an arbitrarily designated enlargement region are stored in an enlargement data buffer, and an enlargement magnification value obtained by dividing the distance between the start point x-coordinate data 11c and the end point x-coordinate data 11e with the length in the x-direction of the original table creation region is stored as attribute data 11g (step H8). After the enlargement magnification is set, data in a region to be enlarged are subjected to dot interlace processing in correspondence with the enlargement magnification, and enlarged data are displayed on the table creation region (step H9).

When reduction processing is performed (in this case, reduction processing is performed while transferring normalized data from the display unit 3 to the display unit 1b), the selection items of "enlargement processing" and "reduction processing" are displayed from the sub item region to the sub items. If "reduction processing" of these items is selected, and if it is determined that the designated flag is ON (step H10), a mouse (not shown) is moved from the main and sub item regions of the display unit 3 to the table creation region, and a start point and an end point where the switch is turned on and off, respectively, are stored as start point x-coordinate data 11h, start point y-coordinate data 11i, end point x-coordinate data 11j, and end point y-coordinate data 11k of a reduction data buffer, and at the same time, a reduction region is displayed by straight lines connecting the start and end points in a rectangular pattern (step H11). A reduction display region is calculated in correspondence with the ratio of the x-direction to the y-direction of an effective table creation region (a display frame effective area other than the main and sub item regions) with reference to the start point x-coordinate data 11h and the start point y-coordinate data 11i of the start point x-coordinate data 11h, the start point y-coordinate data 11i, the end point x-coordinate data 11j, and the end point y-coordinate data 11k, which define the start and end points of the reduction region (step H12) (in this embodiment, the display units 3 and 1b have the same ratio of the x-direction to the y-direction). The start point x-coordinate data 11h, the start point y-coordinate data 11i, the end point x-coordinate data 11j, and the end point y-coordinate data 11k which are normalized for a display on the basis of an arbitrarily designated reduction region are stored in the reduction data buffer, and a reduction magnification value obtained by dividing the distance between the start point x-coordinate data 11h and the end point x-coordinate data 11j with the length in the x-direction of the original table creation region is stored as attribute data 11ℓ (step H13). After the reduction magnification is set, data in a region to be reduced are subjected to dot interlace processing in correspondence with the reduction magnification, and reduced data are displayed on the table creation region (step H14).

(6) Display Control

The display control section 3f of this system will be described in detail below.

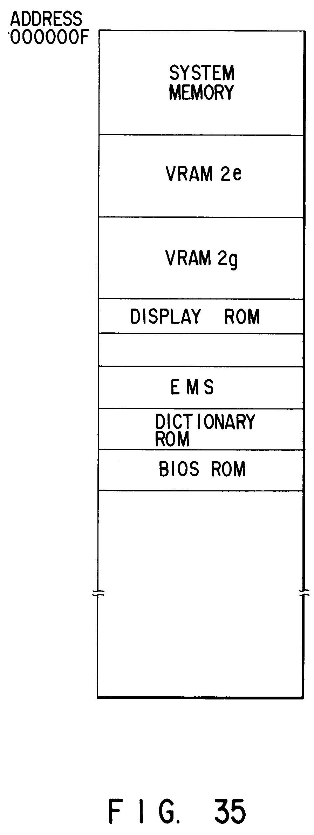

This system includes two display units 3 and 1b. Thus, this system is constituted by a hardware arrangement having two pairs of display functions realized by the display controllers 2d and 2f and the VRAMs 2e and 2g. Therefore, in a memory, two different memory areas are allocated so as to be able to store two different display data (Fig. 35).

Since image data have a huge data volume, data compression processing may be performed.

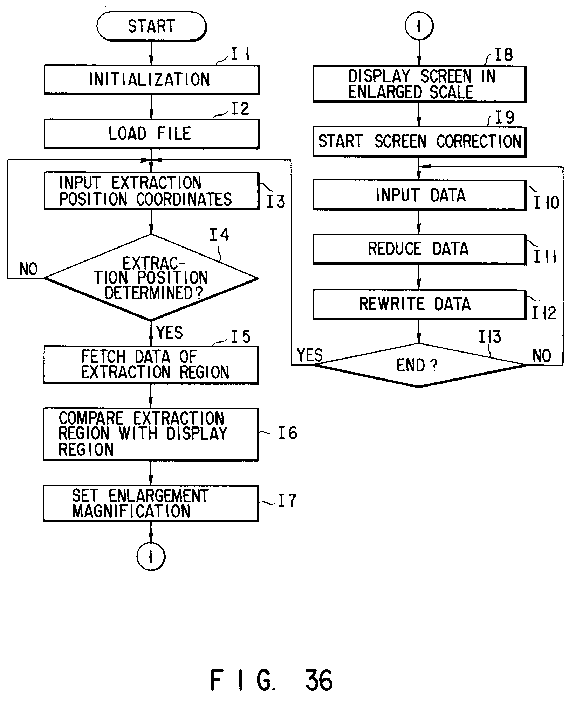

An operation for efficiently correcting/editing a figure, displayed on the display unit 3, on the integrated handwriting display/input device 1 will be described below with reference to the flow chart shown in Fig. 36.

When the correction/edit system is started, the buffers 3g to 3k in the processing control unit 2 are initialized (step I1), and these buffer become empty.

The processing control unit 2 reads a program and data files from the external storage device 4, and stores them in the output data buffer 3k (step I2). At this time, the data files, which cannot be stored in the output data buffer 3k, are subjected to read/write access between the external storage device 4 and the output data buffer 3k, as needed. Thus, necessary data can always be stored in the output data buffer 3k. The processing control unit 2 causes the CRT (display unit) 3 to display a figure to be corrected/edited on the basis of the figure data stored in the output data buffer 3k.

In order to extract some data of the figure displayed on the display unit 3, extraction position coordinates of the figure are input (step I3). In this case, the keyboard (mouse) 5 is used, and the coordinates of start and end points (e.g., the upper left corner point and the lower right corner point in a rectangular region) of a region to be corrected (extraction region) in the displayed figure are input. Thus, the processing control unit 2 displays the extraction region on the screen of the display unit 3.

If the position of the extraction region is correct, a determination instruction is input from the keyboard 5, and the data extraction position is determined (step I4). If the position of the extraction region is not correct, the set extraction region is canceled, and the position of the extraction region is instructed again.

When the data extraction region is determined, the processing control unit 2 stores data (coordinate region data) indicating the position of the region in the position data buffer 3g, and fetches data of the extraction region from the data stored in the output data buffer 3k on the basis of the coordinate region data (step I5).

The processing control unit 2 compares the size of the extraction region with the size of the integrated handwriting display/input device 1 (step I6) to determine an enlargement magnification for data of the extraction region (step I7). The processing control unit 2 enlargement-converts the data of the extraction region in units of bytes according to the enlargement magnification, and displays the converted data on the integrated handwriting display/input device 1 (step I8). Note that the enlargement magnification is stored in the output data buffer 3k in the processing control unit 2.

Then, a correction/edit start command for the screen displayed in the enlarged scale on the display unit 3 is input (step I9). The start command is input using the stylus pen 1k. That is, when the switch at the pen tip is depressed, the ON signal is processed as a screen correction start command by the input section 3a.

When the correction/edit operation of the screen is performed using the stylus pen 1k, and new data are input (step I10), the enlargement-converted data stored in the output data buffer 3k are rewritten. The rewritten data are reduced to a predetermined magnification (the reciprocal number of the enlargement magnification) (step I11), and data stored in the output data buffer 3k and representing the overall screen are rewritten according to the reduced data, thereby changing the overall screen display on the display unit 3 to a display screen according to the correction/edit operation in real time.

When the correction/edit operation of the enlarged screen on the integrated handwriting display/input device 1 is ended, a predetermined command is input using the stylus pen 1k, and the flow returns to the input operation of extraction position coordinates on the display unit 3 (step I3).

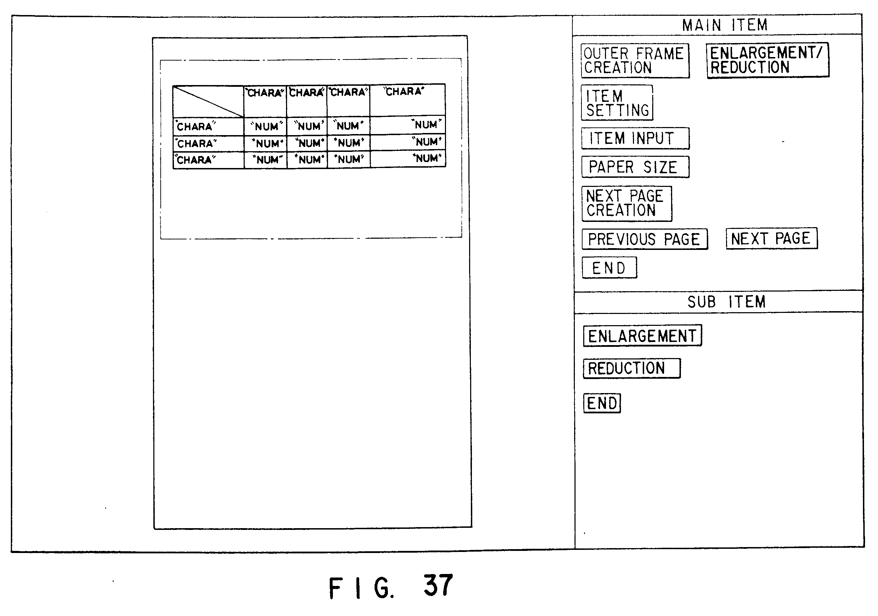

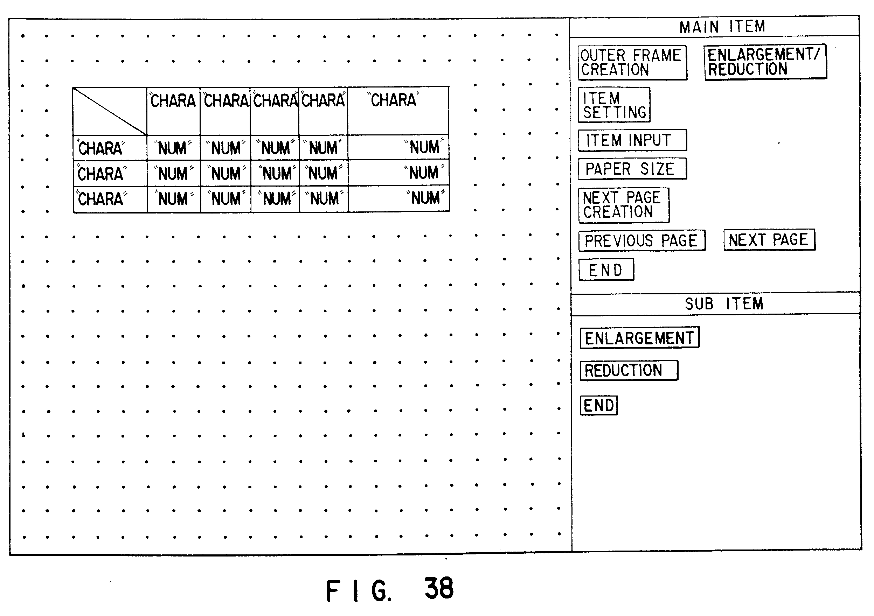

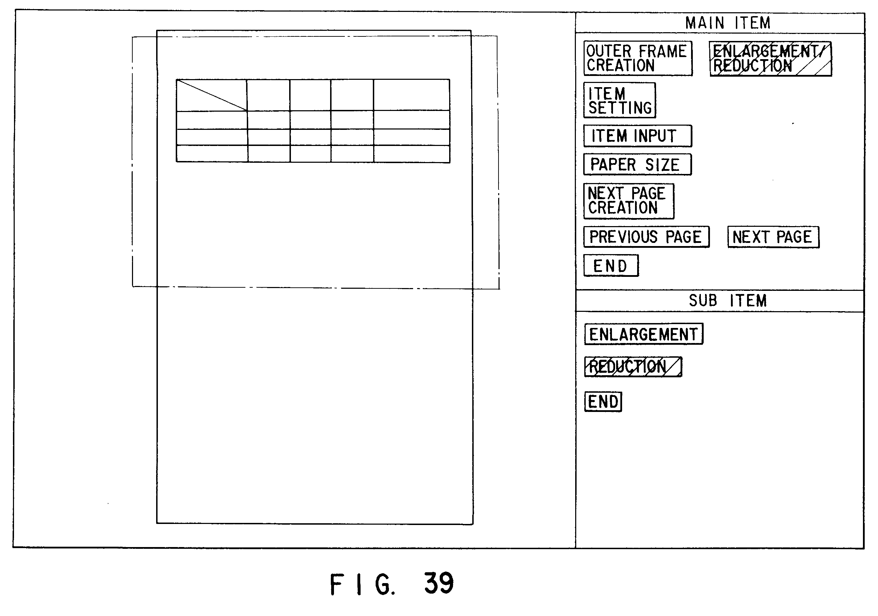

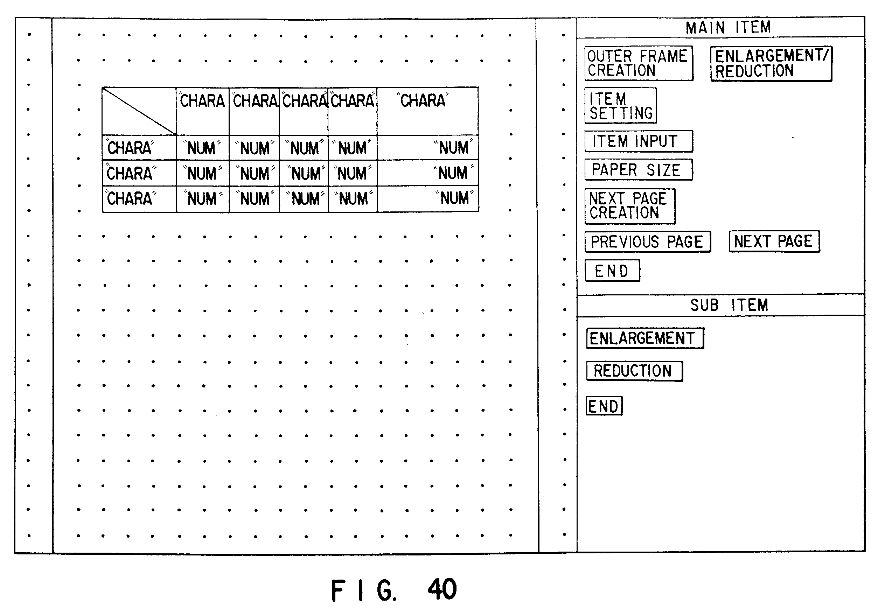

Figs. 37, 38, 39, and 40 show examples of screen display by the above-mentioned operations. The display screen shown in Fig. 38 corresponds to an enlarged display of a portion surrounded by an alternate long and short dashed line on the display screen shown in Fig. 37. In the correction/edit system, the screen shown in Fig. 37 is displayed on the display unit 3, and the screen shown in Fig. 38 is displayed on the display unit 1b. The screen displayed on the display unit 1b can be subjected to correction/edit operations, and the changed content is displayed on the display unit 3 in real time. When a region to be displayed in an enlarged scale on the display unit 3 is changed to a region surrounded by an alternate long and short dashed line in Fig. 39, the screen shown in Fig. 40 is displayed on the display unit 1b.

As described above, an extraction region is set on a screen displayed on one display unit, and data in the extraction region can be corrected/edited on the other display unit. Thus, delicate position adjustments and fine input works can be facilitated, and not only the enlarged screen but also the overall screen can be seen at the same time. For this reason, the current work need not be interrupted to switch the screen unlike in the conventional system. Since the correction/edit operation can be performed using the integrated handwriting display/input device, various correction/edit means, such as figure creation or character input operations by handwriting, figure creation utilizing operability of a pointing device, and the like, can be provided. In the above embodiment, a table is handwritten on the integrated handwriting display/input device. However, the present invention is not limited to correction/edit contents.

**Claims**

1. A correction/edit system having two display devices, characterized by comprising:

   overall image display means (step I2 in Fig. 36) for displaying an overall image on a first display device (3) on the basis of input data;

   region setting means (steps I3 and I4 In Fig. 36) for setting an extraction region to be corrected/edited from a display content displayed on said first display device (3) by said overall image display means;

   enlargement display means (steps I6, I7, and I8 in Fig. 36) for displaying a display content in the region set by said region setting means on a second display device (1b) in an enlarged scale according to the size of the region;

   correction/edit means (steps I9 and I10 in Fig. 36) for correcting/editing the display content displayed in the enlarged scale by said enlargement display means; and

   display rewrite means (step I12 in Fig. 36) for rewriting the display content in the region extracted from said first display device (3) according to data changed by said correction/edit means.

2. A system according to claim 1, characterized in that said second display device (1b) comprises an integrated handwriting input/display device (1) integrated by overlaying a coordinate input device (1a) on a display device.

3. A system according to claim 2, characterized by further comprising an information processing apparatus incorporating said first display device (3), and said integrated handwriting input/display device (1).

4. A system according to claim 3, characterized in that said information processing apparatus can incorporate said integrated handwriting input/display device (1).

5. A system according to claim 2, characterized in that said first display device (3) comprises a high-resolution display.

6. A system according to claim 2, characterized in that said first display device (3) comprises a flat-panel display.

7. A system according to claim 1, characterized in that at least said second display device (1b) of said first display device (3) and said second display device (1b) comprises an integrated handwriting input/display device (1) integrated by overlaying a coordinate input device on a display device.

8. A system according to claim 3, characterized by further comprising data transmission/reception means arranged between said information processing apparatus and said integrated handwriting input/display device (1), and comprising a cable including a flat cable.

9. A system according to claim 5, characterized by further comprising data transmission/reception means arranged between said high-resolution display and said integrated handwriting input/display device (1), and comprising a cable including a flat cable.

10. A system according to claim 6, characterized by further comprising data transmission/reception means arranged between said flat-panel display and said integrated handwriting input/display device (1), and comprising a cable including a flat cable.

11. A system according to claim 1, characterized in that said region setting means comprises at least one of a mouse and a keyboard (5).

12. A system according to claim 7, characterized in that said system is constituted by one information processing apparatus comprising said first display device (3) and said second display device (1b).

F I G. 1A

F I G. 1B

F I G. 1C

F I G. 2

F I G. 3

F I G. 4

F I G. 5

2 PROCESSING CONTROL UNIT

| | |
|---|---|
| INPUT SECTION | 3a |
| RECOGNITION PROCESSING SECTION | 3b |
| RULED LINE/FIGURE CREATION PROCESSING SECTION | 3c |
| ATTRIBUTE SETTING PROCESSING SECTION | 3d |
| DATA INPUT PROCESSING SECTION | 3e |
| DISPLAY CONTROL SECTION | 3f |
| POSITION DATA BUFFER | 3g |
| DICTIONARY DATA BUFFER | 3h |
| REGION DATA BUFFER | 3i |
| CHARACTER INPUT REGION DATA BUFFER | 3j |
| OUTPUT DATA BUFFER | 3k |

F I G. 6

3i REGION DATA BUFFER

| | |
|---|---|
| RULED LINE DATA BUFFER | 4a |
| REGION 1 DATA BUFFER | 4-1 |
| ITEM DATA BUFFER | 4-1a |
| CHARACTER STRING DATA BUFFER | 4-1b |
| NUMERICAL VALUE DATA BUFFER | 4-1c |
| REGION 2 DATA BUFFER | 4-2 |
| ITEM DATA BUFFER | 4-2a |
| CHARACTER STRING DATA BUFFER | 4-2b |
| NUMERICAL VALUE DATA BUFFER | 4-2c |
| REGION n DATA BUFFER | 4-n |
| ITEM DATA BUFFER | 4-na |
| CHARACTER STRING DATA BUFFER | 4-nb |
| NUMERICAL VALUE DATA BUFFER | 4-nc |

F I G. 7

4a RULED LINE DATA BUFFER

| | |
|---|---|
| START POINT x-COORDINATE DATA | 5a |
| START POINT y-COORDINATE DATA | 5b |
| END POINT x-COORDINATE DATA | 5c |
| END POINT y-COORDINATE DATA | 5d |
| LINE WIDTH DATA | 5e |
| LINE TYPE DATA | 5f |

F I G. 8

ITEM DATA BUFFER

| | |
|---|---|
| START POINT x-COORDINATE DATA | 6a |
| START POINT y-COORDINATE DATA | 6b |
| END POINT x-COORDINATE DATA | 6c |
| END POINT y-COORDINATE DATA | 6d |
| ATTRIBUTE DATA | 6e |
| CHARACTER SIZE DATA | 6f |
| LAYOUT DATA | 6g |

F I G. 9

3j CHARACTER INPUT REGION DATA BUFFER

| | |
|---|---|
| INPUT REGION DISPLAY SCREEN DATA | 7a |
| DISPLAY START POINT x-DATA | 7b |
| DISPLAY START POINT y-DATA | 7c |
| REGION DATA | 7d |
| FRAME COORDINATE DATA | 7e |

F I G. 10

7d REGION DATA

| | |
|---|---|
| START POINT x-COORDINATE DATA | 8a |
| START POINT y-COORDINATE DATA | 8b |
| END POINT x-COORDINATE DATA | 8c |
| END POINT y-COORDINATE DATA | 8d |

F I G. 11

7e FRAME COORDINATE DATA

| | |
|---|---|
| FRAME NUMBER DATA | 9a |
| START POINT x-COORDINATE DATA | 9b |
| START POINT y-COORDINATE DATA | 9c |
| END POINT x-COORDINATE DATA | 9d |
| END POINT y-COORDINATE DATA | 9e |

F I G. 12

22

START

DISPLAY INITIAL SCREEN — A1

A2
COOR-
DINATES
INPUT FROM
PEN ? — NO

YES   A3

SWITCH
ON ? — NO

YES   A4

MOUSE
INPUT ? — YES

NO   A15

A16
PEN
PRESENT IN
COMMAND REGION
?

YES
NO

PEN
INPUT ?

YES

NO

A5
MOUSE
CURSOR
PRESENT IN COMMAND
REGION
? — YES

NO

A6
SET DESIGNATED
COMMAND NUMBER

A17
SET DESIGNATED
COMMAND NUMBER

F I G. 13A

EP 0 506 104 A2

A18 — COMMAND NUMBER = TABLE CREATION MODE?

A21 — YES — TABLE CREATION PROCESSING

NO

A19 — COMMAND NUMBER = ATTRIBUTE SETTING MODE ?

A22 — YES — TABLE CREATION ALREADY ENDED ?

NO

A23 — YES — ATTRIBUTE SETTING PROCESSING

NO

A20 — COMMAND NUMBER = TABLE INPUT MODE ?

A24 — YES — ATTRIBUTE SETTING ALREADY ENDED ?

NO

A25 — YES — TABLE INPUT PROCESSING

NO

A7 — COMMAND NUMBER = TABLE CREATION MODE?

YES — A10 — TABLE CREATION PROCESSING

NO

A8 — COMMAND NUMBER = ATTRIBUTE SETTING MODE ?

YES — A11 — TABLE CREATION ALREADY ENDED ? — NO

NO

A12 — YES — ATTRIBUTE SETTING PROCESSING

A9 — COMMAND NUMBER = TABLE INPUT MODE ?

YES — A13 — ATTRIBUTE SETTING ALREADY ENDED ? — NO

NO

A14 — YES — TABLE INPUT PROCESSING

F I G. 13B

EP 0 506 104 A2

**MAIN ITEM**

OUTER FRAME CREATION

ITEM SETTING

ITEM INPUT

PAPER SIZE

NEXT PAGE CREATION

PREVIOUS PAGE    NEXT PAGE

END

**SUB ITEM**

LARGE    MIDDLE    SMALL

DELETE    COPY

MOVE    LINE TYPE

ADD RULED LINE

CANCEL

F I G. 14

START

B1
DISPLAY INITIAL SCREEN

B2
COOR-DINATES INPUT FROM PEN ?
NO
YES

B3
HANDWRITING INPUT ON

B4
OUTER FRAME FLAG= ON ?
YES
NO

B5
TWO EACH VERTICAL AND HORIZONTAL LINES DRAWN ?
NO
YES

B6
NORMALIZE OUTER FRAME

B7
CREATE RULED LINE

B8
SET REGION

RETURN

F I G. 15

START POINT

F I G. 16

26

EP 0 506 104 A2

MAIN ITEM

OUTER FRAME CREATION

ITEM SETTING

ITEM INPUT

PAPER SIZE

NEXT PAGE CREATION

PREVIOUS PAGE    NEXT PAGE

END

SUB ITEM

LARGE    MIDDLE    SMALL

DELETE    COPY

MOVE    LINE TYPE

ADD RULED LINE

CANCEL

li.

F I G.   17

FIG. 18

MAIN ITEM

OUTER FRAME CREATION
ITEM SETTING
ITEM INPUT
PAPER SIZE
NEXT PAGE CREATION
PREVIOUS PAGE
NEXT PAGE
END

SUB ITEM

LARGE
MIDDLE
SMALL
DELETE
COPY
MOVE
LINE TYPE
ADD RULED LINE
CANCEL

| | MAIN ITEM |
| OUTER FRAME CREATION | |
| ITEM SETTING | |
| ITEM INPUT | |
| PAPER SIZE | |
| NEXT PAGE CREATION | |
| PREVIOUS PAGE | NEXT PAGE |
| END | |

| | SUB ITEM | |
| LARGE | MIDDLE | SMALL |
| DELETE | COPY | |
| MOVE | LINE TYPE | |
| ADD RULED LINE | | |
| CANCEL | | |

F I G.  19

EP 0 506 104 A2

F I G.  20

EP 0 506 104 A2

| | CHARA | CHARA | CHARA | CHARA | CHARA |
|---|---|---|---|---|---|
| CHARA | NUM | NUM | NUM | NUM | NUM |
| CHARA | NUM | NUM | NUM | NUM | NUM |
| CHARA | NUM | NUM | NUM | NUM | NUM |

**MAIN ITEM**

OUTER FRAME CREATION

ITEM SETTING

ITEM INPUT

PAPER SIZE

NEXT PAGE CREATION

PREVIOUS PAGE    NEXT PAGE

END

**SUB ITEM**

CHARACTER    NUMERAL    EQUATION

DELETE    HATCHING    CONFIRM

CANCEL

HORIZONTAL WRITING    VERTICAL WRITING

LEFT ALIGN    RIGHT ALIGN

CENTERING    DECIMAL TAB

F I G.  21

F I G. 22

EP 0 506 104 A2

START

READ OUT DATA FROM
CHARACTER INPUT REGION — E1
DATA BUFFER

CONVERT DISPLAY
COORDINATES INTO
COORDINATE VALUE — E2
CORRESPONDING TO ITEM

E3
CHARACTER STRING DATA STORED ? — YES → READ OUT CHARACTER STRING DATA — E4

NO

DISPLAY INPUT REGION — E5

E6
COORDINATES INPUT FROM PEN ? — NO

YES

E7
WITHIN INPUT FRAME ? — NO

YES

CHECK INPUT FRAME
NUMBER BASED ON — E8
COORDINATE VALUE

CHARACTER RECOGNITION PROCESSING — E9

E10
END BUTTON DEPRESSED ? — NO

YES

STORE CHARACTER STRING DATA IN BUFFER — E11

DELETE INPUT REGION — E12

RETURN

F I G. 23

33

EP 0 506 104 A2

MAIN ITEM

OUTER FRAME CREATION

ITEM SETTING

ITEM INPUT

PAPER SIZE

NEXT PAGE CREATION

PREVIOUS PAGE    NEXT PAGE

END    COPY

SUB ITEM

CANCEL    CONFIRM

"CHARA" "CHARA" "CHARA" "CHARA" "CHARA"

≪ < T O K Y O > ≫

END

F I G. 24

EP 0 506 104 A2

| JAPAN | TOKYO | KYOTO | OSAKA | "CHARA" |
|---|---|---|---|---|
| "CHARA" | "NUM" | "NUM" | "NUM" | "NUM" |
| "CHARA" | | | | |
| "CHARA" | | | | |

## MAIN ITEM

OUTER FRAME CREATION

ITEM SETTING

ITEM INPUT

PAPER SIZE

NEXT PAGE CREATION

PREVIOUS PAGE    NEXT PAGE

END    COPY

## SUB ITEM

CANCEL    CONFIRM

# F I G. 25

FIG. 26

3

"3"= 252357

F I G.  27          F I G.  28

| 1 | DIRECTION<br>SERIES 1 | CHARACTER<br>CODE |
|---|---|---|
| | | |
| N | DIRECTION    DIRECTION _ DIRECTION<br>SERIES 1  ,  SERIES 2    SERIES 3 | CHARACTER<br>CODE |
| | | |

F I G.   29

START

DISPLAY INITIAL SCREEN — G1

①

COORDINATES INPUT FROM PEN? — G2 — NO

YES

PEN SWITCH ON ? — G3 — NO

YES

PEN PRESENT IN COMMAND REGION ? — G4 — NO

YES

COMMAND NUMBER = PAPER MODE? — G5

YES

G6 — SET DESIGNATED PAPER NUMBER

NO

COMMAND NUMBER = GRID MODE? — G7

YES

G8 — SET DESIGNATED GRID NUMBER

NO

SET DEFAULT NUMBER — G9

① — NO — END ?

YES

RETURN

F I G. 30

EP 0 506 104 A2

| MAIN ITEM |
| --- |

OUTER FRAME CREATION

ITEM SETTING

ITEM INPUT

PAPER SIZE

NEXT PAGE CREATION

PREVIOUS PAGE    NEXT PAGE

END

| SUB ITEM |
| --- |

A5    A4    A3

A5    A4    A3

FREE    CANCEL

F I G. 31

| PAPER SIZE | ⌐10a |
| GRID INTERVAL | ⌐10b |

**GRID INTERVAL BUFFER 3m**

| X BASIC GRID | ⌐10h |
| Y BASIC GRID | ⌐10i |
| X SUB GRID | ⌐10j |
| Y SUB GRID | ⌐10k |
| | |

**PAPER DATA BUFFER 3ℓ**

| A5 SIZE | ⌐10c |
| B5 SIZE | ⌐10d |
| A3 SIZE | ⌐10e |
| B3 SIZE | ⌐10f |
| FREE SIZE | ⌐10g |

**GRID BUFFER 3n**

| 5.08 | ⌐10ℓ |
| 2.54 | ⌐10m |
| 0.508 | ⌐10n |
| 0.254 | ⌐10o |
| 0.127 | ⌐10p |

# F I G.  32

40

F I G. 33

ENLARGEMENT
PROCESSING — 11a

REDUCTION PROCESSING — 11b

START POINT
X-COORDINATE DATA — 11c

START POINT
Y-COORDINATE DATA — 11d

END POINT
X-COORDINATE DATA — 11e

END POINT
Y-COORDINATE DATA — 11f

ATTRIBUTE DATA — 11g

START POINT
X-COORDINATE DATA — 11h

START POINT
Y-COORDINATE DATA — 11i

END POINT
X-COORDINATE DATA — 11j

END POINT
Y-COORDINATE DATA — 11k

ATTRIBUTE DATA — 11ℓ

F I G.  34

ADDRESS
000000F

| |
|---|
| SYSTEM MEMORY |
| VRAM 2e |
| VRAM 2g |
| DISPLAY ROM |
| |
| E M S |
| DICTIONARY ROM |
| BIOS ROM |

F I G. 35

START

INITIALIZATION — I1

LOAD FILE — I2

INPUT EXTRACTION POSITION COORDINATES — I3

EXTRACTION POSITION DETERMINED? — I4
NO
YES

FETCH DATA OF EXTRACTION REGION — I5

COMPARE EXTRACTION REGION WITH DISPLAY REGION — I6

SET ENLARGEMENT MAGNIFICATION — I7

DISPLAY SCREEN IN ENLARGED SCALE — I8

START SCREEN CORRECTION — I9

INPUT DATA — I10

REDUCE DATA — I11

REWRITE DATA — I12

END? — I13
YES
NO

F I G. 36

EP 0 506 104 A2

| | 'CHARA' | 'CHARA' | 'CHARA' | 'CHARA' |
|---|---|---|---|---|
| 'CHARA' | 'NUM' | 'NUM' | 'NUM' | 'NUM' |
| 'CHARA' | 'NUM' | 'NUM' | 'NUM' | 'NUM' |
| 'CHARA' | 'NUM' | 'NUM' | 'NUM' | 'NUM' |

## MAIN ITEM

OUTER FRAME CREATION    ENLARGEMENT/ REDUCTION

ITEM SETTING

ITEM INPUT

PAPER SIZE

NEXT PAGE CREATION

PREVIOUS PAGE    NEXT PAGE

END

## SUB ITEM

ENLARGEMENT

REDUCTION

END

F I G. 37

EP 0 506 104 A2

| | CHARA | CHARA | CHARA | CHARA | ¨CHARA¨ |
|---|---|---|---|---|---|
| ¨CHARA¨ | ¨NUM¨ | ¨NUM¨ | ¨NUM¨ | ¨NUM¨ | ¨NUM¨ |
| ¨CHARA¨ | ¨NUM¨ | ¨NUM¨ | ¨NUM¨ | ¨NUM¨ | ¨NUM¨ |
| ¨CHARA¨ | ¨NUM¨ | ¨NUM¨ | ¨NUM¨ | ¨NUM¨ | ¨NUM¨ |

**MAIN ITEM**

OUTER FRAME CREATION    ENLARGEMENT/ REDUCTION

ITEM SETTING

ITEM INPUT

PAPER SIZE

NEXT PAGE CREATION

PREVIOUS PAGE    NEXT PAGE

END

**SUB ITEM**

ENLARGEMENT

REDUCTION

END

FIG. 38

EP 0 506 104 A2

## MAIN ITEM

| OUTER FRAME CREATION | ENLARGEMENT/ REDUCTION |

| ITEM SETTING |

| ITEM INPUT |

| PAPER SIZE |

| NEXT PAGE CREATION |

| PREVIOUS PAGE | NEXT PAGE |

| END |

## SUB ITEM

| ENLARGEMENT |

| REDUCTION |

| END |

F I G. 39

| | CHARA | CHARA | CHARA | CHARA | CHARA |
|---|---|---|---|---|---|
| CHARA | NUM | NUM | NUM | NUM | NUM |
| CHARA | NUM | NUM | NUM | NUM | NUM |
| CHARA | NUM | NUM | NUM | NUM | NUM |

**MAIN ITEM**

OUTER FRAME CREATION    ENLARGEMENT/ REDUCTION

ITEM SETTING

ITEM INPUT

PAPER SIZE

NEXT PAGE CREATION

PREVIOUS PAGE    NEXT PAGE

END

**SUB ITEM**

ENLARGEMENT

REDUCTION

END

F I G. 40

EP 0 506 104 A2